(19) **Europäisches Patentamt**
**European Patent Office**
**Office européen des brevets**

(11) **EP 1 618 149 B1**

(12) **EUROPEAN PATENT SPECIFICATION**

(45) Date of publication and mention
of the grant of the patent:
**17.01.2007 Bulletin 2007/03**

(51) Int Cl.:
***C08L 5/00*** *(2006.01)*      ***C11D 3/00*** *(2006.01)*
***C11D 3/22*** *(2006.01)*      ***C11D 17/00*** *(2006.01)*

(21) Application number: **04725421.4**

(22) Date of filing: **02.04.2004**

(86) International application number:
**PCT/GB2004/001456**

(87) International publication number:
**WO 2004/096906 (11.11.2004 Gazette 2004/46)**

(54) **THICKENABLE COMPOSITIONS**

VERDICKBARE ZUSAMMENSETZUNGEN

EPAISSISSANTS

(84) Designated Contracting States:
**AT BE BG CH CY CZ DE DK EE ES FI FR GB GR
HU IE IT LI LU MC NL PL PT RO SE SI SK TR**

(30) Priority: **25.04.2003 GB 0309369**

(43) Date of publication of application:
**25.01.2006 Bulletin 2006/04**

(73) Proprietor: **Reckitt Benckiser Healthcare (UK)
Limited
Slough, Berkshire SL1 3UH (GB)**

(72) Inventors:
 • **BOYD, Matthew, John,
  Nottingham University
  Nottingham NG7 2RD (GB)**
 • **MITCHELL, John, Richard,
  Nottingham University
  Loughborough LE12 5RD (GB)**
 • **MELIA, Colin, David,
  Nottingham University
  Nottingham NG7 2RD (GB)**

 • **JOLLIFFE, Ian G.,
  Reckitt Benckiser H'Care UK Ltd.
  Hull HU8 7DS (GB)**
 • **DETTMAR, Peter, William
  Patrington,
  East Yorkshire HU12 0PE (GB)**
 • **HAMPSON, Frank, Chadwick
  Hedon,
  East Yorkshire HU12 8HU (GB)**

(74) Representative: **Dickson, Elizabeth Anne et al
Reckitt Benickser plc
Legal Department - Patents Group
Dansom Lane
Hull
HU8 7DS (GB)**

(56) References cited:
**EP-A- 0 346 097      EP-A- 0 394 731
EP-A- 0 399 774      EP-A- 0 595 772
WO-A-00/67799       US-A- 5 432 215**

**Description**

The present invention relates to thickenable compositions. More specifically the present invention relates to liquid compositions capable of thickening at a desired location.

EP-A-399774 describes a composition comprising 1-30 parts of a gum, including xanthan gum, and 70-99 parts of a water soluble polysaccharide, preferably an alginate, as a rheology control agent. In one composition, viscosity rises from 7894 cP, to 10622 cP, on dilution.

In a first aspect the present invention provides a composition comprising water, a first anionic polymer and a second anionic polymer, the polymers being such that on admixture of the composition with further water a diluted composition of increased viscosity is produced, characterised in that the composition has a viscosity, prior to said admixture with water, not in excess of 500 mPa.s. (shear rate $1s^{-1}$; 25°C).

The composition may be useful in industrial or household fields, including food and drinks manufacturing, cleaning products, oilfield applications, and therapeutic compositions.

The composition of the present invention, prior to admixture with water, is preferably heterogeneous, or segregated, in its microstructure. Preferably it has precipitates rich in one anionic polymer, in a liquid matrix rich in the second anionic polymer. The composition may be mixed with water prior to use (for example in a receptacle, pipeline, etc). Alternatively it may be mixed with water at the desired location. However delivered, addition of water produces a composition which is less segregated, preferably homogeneous, and which is of increased viscosity.

The first anionic polymer may have sulphate or, preferably, carboxylate groups. The second anionic polymer may have carboxylate or sulphate groups. Preferred second anionic polymers have carboxylate groups.

Preferably the first anionic polymer is xanthan.

Xanthan (otherwise called xanthan gum) is a microbial exopolysaccharide produced by the naturally occurring bacterium *Xanthomonas campestris.* It is a widely used biopolymer in the food and pharmaceutical industries. It is also used in many other fields such as petroleum production, pipeline cleaning, enhanced oil recovery, textile printing and dyeing, ceramic glazes, slurry explosives and in cosmetics. It is used for the purposes of thickening, suspending, stabilising and gelling.

Xanthan consists of a pentasaccharide repeating subunit. It consists of two D-glucopyranosyl units, two D-mannopyranosyl units and a D-glucopyranosyluronic acid unit as determined by methylation analysis and uronic acid degradation. The molecule has a $(1 \rightarrow 4)$ linked $\beta$-D-glucopyranosyl backbone as found in cellulose, with a trisaccharide side-chain attached to the O-3 position on alternate glucosyl units. The side chain is constructed such that the D-glucuronosyl unit is flanked by the two mannosyl units. Approximately half of the terminal D-mannosyl units have a pyruvic acid moiety across the O-4 and O-6 positions. The other D-mannosyl unit is substituted at the O-6 position with an acetal group. Xanthan is available readily as the sodium or potassium salt, or as mixtures of sodium, potassium or calcium salts. Xanthan has been estimated to have a molecular weight between 2-50 x 10 $^6$. This wide range of values is believed to be due to polymer chain association.

The second anionic polymer may be an alginate.

Alginates may be found in and isolated from various organisms, in particular from algae belonging to the order *Phaeophyceae* and soil bacteria such as *Azotobacter vinelandii* and *Azotobacter crococcum* and from several strains of Pseudomonas bacteria. Common algal sources of algins include *Laminaria digitata, Ecklonia maxima, Macrocystis pyrifera, Lessonia nigrescens, Ascophyllum nodosum, Laminaria japonica, Durvillea antartica, Durvillea potatorum* and, especially, *Laminaria hyperborea.*

Alginic acid is a linear hetero-polysaccharide comprising units of β-D-mannuronic acid and α-L-guluronic acid. Alginic acid may comprise homopolymeric sequences of mannuronic acid, homopolymeric sequences of guluronic acid, and mixed sequences of mannuronic acid and guluronic acid units.

Salts of alginic acid used in the method of the present invention may include alkali metal salts, for example sodium and potassium salts, and ammonium and alkanolamine salts. Alkali metal salts are of particular interest.

Preferred are water-swellable, preferably water soluble, salts of alginic acids. Most preferably they are provided as solutions, substantially without precipitates therein.

The term "alginates" as used herein includes salts of alginic acid, irrespective of the relative proportion of mannuronic and guluronic units, and is intended to include glycolated or alkoxylated derivatives, especially those derivatised with propylene glycol. However, preferred compounds are not alkoxylated or glycolated. Guluronic acid-rich alginic acid and guluronic acid-rich alginates are of particular interest. Preferred compounds have at least 50%, more preferably 50-80%, most preferably 55-75% of guluronic units (by weight), the balance being mannuronic units. For guidance on production of algins very high in guluronic units the reader is referred to WO 98/51710.

Alginates are used for the production of creams, dressings, fruit juices, ice creams, low fat spreads and beers. They are also used in pharmaceutical products, textile printing, paper manufacture and in welding.

In accordance with a preferred aspect of the present invention there is provided a composition comprising water, xanthan and an alginate, the concentration of xanthan and alginate being such that on admixture of the composition with further water a diluted composition of increased viscosity is produced.

Alternatively a second anionic polymer may be a carboxymethyl cellulose salt. Such compounds are widely available, and are used in, for example, paints, gums and foodstuffs. Sodium carboxymethyl cellulose is especially preferred. This may be made by using alkali to open up cellulose chains, and then reacting the cellulose chains with sodium monochloroacetate, to yield sodium carboxymethyl cellulose.

In an alternative embodiment the second anionic polymer is a polyacrylate, preferably an alkali metal salt, especially sodium. Such compounds are, of course, extremely well known.

In an alternative embodiment the second anionic polymer may be carrageenan. Carrageenans are also, of course, very well known. Like alginates they are extracts from seaweed. There are different types available, including kappa-carrageenan, iota-carrageenan, theta-carrageenan and lambda-carrageenan. Potentially any of these may be of use in the present invention, although lambda-carrageenan is preferred. Carrageenan differs from the other alginate polymers mentioned herein, in that the acid groups are sulphate groups, not carboxylate groups.

In further embodiments the second anionic polymer may be a pectin, also very well known. A pectin may be a High Ester Methoxy (HEM) pectin, a Low Methyoxyl Conventional (LMC) pectin or a Low Methoxyl Amidated (LMA) pectin. Potentially any of these are of use in the present invention but the use of LMA pectins is preferred.

In accordance with the present invention the use of first and second anionic polymers which are of the same chemical class but of differing grade is not excluded, provided that the outcome of increased viscosity on dilution is possible. Preferably, however, the first and second anionic polymers are of differing chemical types.

The use of a third anionic polymer in the compositions of the present invention is not excluded, but it is not preferred. Preferably substantially the only polymers present are the first anionic polymer and the second anionic polymer. In particular it is preferred that no galactomannan or glucomannan is present.

It should be appreciated that compositions of water, first anionic polymer and second anionic polymer may show a range of properties depending on their relative proportions. However at certain concentrations of first anionic polymer and second anionic polymer interesting and valuable changes in viscosity and/or viscoelastic properties may be obtained. Those certain concentrations may depend upon the concentration of first anionic polymer and/or second anionic polymer , and on whether further compounds having an effect on such properties are present in the composition.

However, it may broadly be stated that the composition preferably contains at least 0.2% w/w first anionic polymer, preferably at least 0.5% w/w, and most preferably at least 0.8% w/w (in each case before any said admixture with further water).

It may also be broadly stated that the composition suitably contains up to 20% w/w first anionic polymer, preferably up to 12% w/w, and more preferably up to 5% w/w. Most preferably it contains up to 3% w/w first anionic polymer, and, especially up to 2% w/w first anionic polymer (in each case before any said admixture with further water).

It may also be broadly stated that the composition preferably contains at least 0.2% w/w second anionic polymer, preferably at least 0.5% w/w, and most preferably at least 0.8% w/w (in each case before any said admixture with further water).

It may also be broadly stated that the composition suitably contains up to 20% w/w second anionic polymer, preferably up to 15% w/w, more preferably up to 12% w/w, and yet more preferably up to 5% w/w. Most preferably it contains up to 3% w/w second anionic polymer, especially up to 2% w/w (in each case before any said admixture with further water).

Preferably the composition contains at least 90% w/w water, preferably at least 95% w/w water.

By "water" herein we mean to include any aqueous liquid, for example saliva.

In a preferred composition the viscosity prior to any said admixture with water is not in excess of 250 mPa.s.

Preferably a composition of the invention has the property that it may undergo an increase in viscosity of at least 50 mPa.s on admixture with an equal volume of water, more preferably an increase of at least 100 mPa.s.

Preferably a composition of the invention has the property that after admixture with an equal volume of water the diluted composition is of viscosity at least 150 mPa·s, more preferably at least 1 Pa.s (but in all cases its viscosity is preferably greater than the viscosity of the original composition).

Preferably the composition is such that a diluted composition of increased viscosity obtained on mixing one volume of the composition with a volume of water in the range 0.1-5 parts by volume.

For the purposes of this specification the viscosity values stated herein in defining aspects of the invention and in claims are those measured by a Bohlin C-VOR Rheometer at 25°C at a shear rate of 1s$^{-1}$, with a 30 second delay time after start-up, and a 60 second integration time.

Naturally a composition of the invention will have a certain viscosity. In accordance with the present invention, by the addition of water the viscosity may be raised. Furthermore the composition may also be such that by increasing the concentration of the second anionic polymer the viscosity may be reduced. It is found that the latter reduction is especially pronounced at low shear rates.

Although we do not wish to be bound by any theory, it is believed that compositions with certain concentrations of first anionic polymer and second anionic polymer may undergo phase separation, which may explain the viscosity changes. In particular, it is believed that at least for certain compositions, the microstructure may be homogeneous (by which we mean that it appears as one phase under an optical microscope) or heterogeneous, depending on the relative concentration of the first and second anionic polymers, and on the amount of water present. Compositions which are supplied in one form and which change phase, in use, with an attendant change in viscosity, are of particular interest; notably compositions which are heterogeneous, and which become homogeneous, and more viscous, when exposed to water in the environment of use.

One example is a water-xanthan-alginate composition. At certain amounts of xanthan and alginate this may be homogenous, but at a higher amount of alginate and an unchanged level of xanthan may be heterogeneous, having xanthan-rich regions in an alginate-rich liquor. This is of lower viscosity. Those xanthan-rich regions are in the form of fibrils or strands. Addition of water may lead to recovery of homogeneity, and an increase of viscosity.

Other examples of compositions which can pass between homogeneous to non-homogeneous states are: water-xanthan-sodium carboxymethyl cellulose; water-xanthan-sodium polyacrylate; water-xanthan-LMA pectin; and water-xanthan-carrageenan.

The property of obtaining an increase in viscosity on addition of water may be valuable industrially.

In a preferred embodiment the composition of the first aspect is supplied in its phase separated form. This is of relatively low viscosity and may be delivered to a desired location as a flowable liquid. However, at the desired location water is admixed with the composition, and the viscosity increases.

The composition may contain an additional salt (that is, in addition to the second anionic polymer). The additional salt is suitably soluble in water. Preferably the composition containing the additional salt has the property that a given increase in viscosity, on admixture of the composition with further water, occurs when a given concentration of second anionic polymer is present; whereas in a composition without the additional salt the same increase in viscosity, on admixture of the composition with further water, is achieved when the concentration of second anionic polymer is lower.

An additional salt may provide a useful way of tailoring the product. If a formulator wants to have a composition which contains a higher concentration of second anionic polymer but which is still of low viscosity, an additional salt is a tool which may be useful.

Suitable as an additional salt is an alkali metal halide, for example sodium chloride or potassium chloride, or an alkali metal phosphate, for example sodium or potassium phosphate or an alkali metal bicarbonate, for example sodium bicarbonate or potassium bicarbonate.

A composition of the invention may contain a humectant, preferably 0.5-5% w/w. A preferred humectant is glycerol. A humectant may be of particular value in a composition in which the first and/or second anionic polymer is of relatively low molecular weight, for example having a weight average molecular weight ($M_W$) less than 25,000.

Suitably the first anionic polymer has an $M_W$ of at least 20,000, preferably at least 50,000, more preferably at least 100,000, and most preferably at least 150,000.

The first anionic polymer may have an $M_W$ of up to up to 1,000,000, for example up to 500,000, or up to 250,000.

Preferably the first anionic polymer has an $M_W$ of up to 8,000,000, more preferably up to 5,000,000.

Suitably the second anionic polymer has an $M_W$ of at least 1000, preferably at least 5,000, more preferably at least 10,000, and most preferably at least 20,000.

Suitably the second anionic polymer has an $M_W$ of up to 600,000, preferably up to 450,000, more preferably up to 250,000, and most preferably up to 100,000.

Preferably the first anionic polymer has an $M_W$ in excess of - preferably at least double that of - the second anionic polymer.

In accordance with a second aspect of the present invention there is provided a composition which is one of a set of compositions comprising water, a first anionic polymer and a second anionic polymer, the set of compositions defining a region on the ternary phase diagram for water, the first anionic polymer and the second anionic polymer, in which region increasing the water content by a selected amount increases the viscosity of the composition, characterised in that the composition has a viscosity, prior to said admixture with water, not in excess of 500 mPa.s. (shear rate $1s^{-1}$; 25°C).

The composition of the second aspect may be such that increasing the second anionic polymer content by a selected amount decreases the viscosity of the composition.

In accordance with a third aspect of the present invention there is provided a composition comprising water, 0.2-5% w/w of the first anionic polymer and 0.2-5% w/w of the second anionic polymer, the composition having the following characteristics:

a) up to a threshold value of the second anionic polymer within the range stated above, the composition is of predominantly elastic behaviour,
b) beyond that threshold value, the composition is of predominantly viscous behaviour,
c) beyond that threshold value, the composition may be rendered of predominantly elastic behaviour by admixture of further water, and

d) the composition has a viscosity, prior to said admixture with water, not in excess of 500 mPa.s. (shear rate 1s$^{-1}$; 25°C).

By "predominantly" we mean that under standard measurement conditions one behaviour predominates over the other. By "elastic" we mean that on application of a force the composition is displaced yet recovers its original shape on removal of the force. By "viscous" we mean that on application of a force the composition flows and so cannot recover its original shape on removal of the force. Elastic and viscous properties are defined numerically by the elastic modulus (or storage modulus) G' and the viscous modulus (or loss modulus) G", respectively. "Predominantly elastic" means that the elastic modulus exceeds the viscous modulus and vice-versa.

In accordance with a fourth aspect of the present invention there is provided a composition comprising water, 0.2-5% w/w of a first anionic polymer and 0.2-5% w/w of a second anionic polymer, the composition having the following characteristics:

a) up to a threshold value of the second anionic polymer within the range stated above, the composition is a substantially homogeneous composition,
b) beyond that threshold value the composition is a heterogeneous composition,
c) beyond that threshold value, the composition may be rendered substantially homogeneous by admixture with further water, and
d) the composition has a viscosity, prior to said admixture with water, not in excess of 500 mPa.s. (shear rate 1s$^{-1}$; 25°C)

In accordance with a fifth aspect of the present invention there is provided a composition comprising water, 0.2-5% w/w of a first anionic polymer and 0.2-5% w/w of a second anionic polymer, the composition having the following characteristics:

a) up to a threshold value of the second anionic polymer within the range stated above, the composition has a viscosity of at least 1 Pa.s,
b) beyond that threshold value, the composition has a viscosity at least 50 mPa·s lower than in a),
c) beyond that threshold value, the composition may be rendered more viscous than in b) by at least 50 mPa.s by admixture with further water, and
d) the composition has a viscosity, prior to said admixture with water, not in excess of 500 mPa.s. (shear rate 1s$^{-1}$; 25°C)

In any composition of the present invention, as defined in any of the above aspects, a preferred composition comprises 0.5-3% w/w of the first anionic polymer and 0.5-3% w/w of the second anionic polymer. An especially preferred composition comprises 0.8-2% w/w of the second anionic polymer and 0.8-2% w/w of the first anionic polymer.

In accordance with a sixth aspect of the present invention there is provided a method of thickening a composition as defined in any of the preceding aspects. The method comprises admixing any such composition with water at, or shortly before delivery to, a desired location of use, to yield a diluted, yet thickened, composition.

Preferably, the interval between mixing with water and attainment of a beneficial degree of thickening is up to 200 seconds, preferably up to 60 seconds, most preferably up to 30 seconds. Preferably the time to achieve a beneficial degree of thickening is controllable, for example due to the presence of an additional component whose amount can be varied. Such component may itself be a chemical, for example a thickener, able to control the access to an absorbable source of water, of the first anionic polymer and second anionic polymer components.

In accordance with a seventh aspect of the present invention there is provided a thickened composition produced by aqueous dilution of a composition as defined herein.

The compositions of the present invention may be prepared by mixing together the ingredients until a flowable blend, preferably of segregated microstructure, is achieved.

Non-therapeutic applications of the present invention are applications which also benefit from having initially a composition of low viscosity, and which on dilution with water becomes a liquid of higher viscosity, preferably with a propensity to adhere to a target surface. A composition of the present invention may find application in a household cleaning composition. For example the composition may be used in a device which periodically releases a composition according to the first aspect of the invention in its non-diluted, non-viscous form, into a lavatory bowl. The composition may run down the lavatory bowl. As it does so, where it comes into contact with water it may thicken and adhere to the sanitaryware, above the water line. Where it does not, it may thicken and adhere to the sanitaryware, below the water line. One of the anionic polymers, preferably the second anionic polymer, may have a strong sequestrant action, and thereby may act to prevent or remove limescale. Alternatively the composition may be sprayed under the rim of a lavatory bowl where it mixes with water present there and clings under the rim, until washed down by the next flush.

In another non-therapeutic embodiment a composition of the invention may be part of an encapsulated composition for use in a ware-washing machine. The encapsulating material may be water-soluble, releasing the contents into the ware washing machine at a desired time in the wash cycle. The composition is then freed and can adhere to the hard surfaces within the ware washing machine. If a polymer present has sequestrant action, as is preferred, the composition may thereby function to combat or prevent scale on the surfaces of the ware washing machine.

In another non-therapeutic embodiment a composition of the invention may be used as part of a spot cleaner for fabrics. It may be particularly useful when an aqueous-based spillage has occurred, for example on an item of clothing or a carpet; or where a dried stain is moistened with water, then contacted with a composition of the invention. In each case the composition clings to the region of the stain so that active cleaning components - for example surfactants and/or bleaches or enzymes - can work on the stain.

Other non-therapeutic embodiments may be as constituents of personal cleaning products, for example shampoos, hand washes and shower gels, of cosmetic products, for example skin hydrating or softening compositions, hair treatment or hair removing products, face masks, or of food or beverage products. Thickening may be effected by admixture of a composition of invention and water on filling of a receptacle, for example a bottle or tub.

In another non-therapeutic invention a composition of the invention is used as a shower spray cleaner, sprayed onto a shower surface (for example a tiled surface or a shower screen or door) as a thin liquid and thickening as a result of admixture with water present on the shower surface :

Other applications of compositions may include in industrial cleaning, for example in pipeline cleaning, in ceramic glazes, in slurry explosives, in inks and paints, and in adhesives.

Other non-therapeutic applications are in oilfield applications, including as an additive to drilling fluids, and in Enhanced Oil Recovery (EOR) and as an oilbed workover and completion fluid.

A composition of the invention may be a dental composition, for example a denture fixative.

A composition of the invention may be used for treatment of an animal or, preferably, a person.

A composition of the invention may be used as the base composition for an ingestible pharmaceutical form, for example one which becomes less viscous as it travels in the gastro-intestinal tract, and breaks down at a desired locus, for example in the stomach. Such an ingestible form may, for example, be a lozenge or tablet. Such an ingestible form may contain an active pharmaceutical compound, for example encapsulated by or distributed within the ingestible form. Breakdown of the composition at the desired locus may happen rapidly. Alternatively the composition may be designed to break down slowly, to release an active compound over a prolonged period.

When a composition of the present invention is mixed with water in the saliva it may adhere to a surface of the gastro-intestinal tract, preferably to the oesophagus, and most preferably to the lower oesophagus. However, it may be designed to adhere to a different surface, for example a surface of the mouth or throat, for example to relieve mouth ulceration or throat inflammation.

The diluted composition of increased viscosity may have adhesive qualities, especially to a bodily surface. An adhered coating of the composition may prevent or alleviate an inflamed or otherwise damaged bodily surface. It may allow a bodily surface to heal by providing a barrier on top of a damaged surface to protect it from further inflammation or damage.

Alternatively or additionally an adhered coating is such as to promote the absorption, through a bodily surface, of an active pharmacological agent. The active pharmacological agent may be co-formulated with the composition or administered separately. It may be laid down as part of the coating or may be separate, but absorbed through the coating, in use.

A bodily surface could be an epidermal surface. An epidermal surface could be any external surface skin. Damaged skin could be skin which is blistered, burnt by fire, inflamed, pustulated, sunburnt, bitten or stung.

A bodily surface could be a mucosal surface. A mucosal surface could be any internal bodily surface. Examples include the mouth (including tongue), nose, eyes, throat, oesophagus, stomach, vagina and rectum.

A bodily surface could be a torn or cut surface, for example an exposed surface of a muscle, exposed by a wound or other trauma.

The composition may contain an active pharmaceutical agent, particularly when the active agent has an effect on an inflamed or damaged bodily surface, for example an oesophagus inflamed by gastric reflux, or when it is desired to permit the active agent to be absorbed into the blood stream through the skin, via the adhered composition.

Suitable active agents include analgesics, antiinflammatory agents and antipyretics (e.g. acetaminophen, ibuprofen, naproxen, flurbiprofen, diclofenac, ketoprofen, choline salicylate, benzydamine, buprenorphine, hydrocortisone, betamethasone); decongestants (e.g. pseudoephedrine, phenylephrine, oxymetazoline, xylometazoline); mineral salts (e.g. zinc gluconate, zinc acetate); cough suppressants (e.g. dextromethorphan, codeine, pholocodine); expectorants (e.g. guaiphenesin, n-acetylcysteine, bromhexine); antiseptics (e.g. triclosan, chloroxylenol, cetylpyridinium chloride, benzalkonium chloride, amylmetacresol, hexylresourcinol, dichlorobenzyl alcohol, benzyl alcohol, dequalinium chloride, silver sulphadiazine); cardiovascular agents (e.g. glyceryl trinitrate); local anaesthetics (e.g. lignocaine, benzocaine); cytoprotectants (e.g. carbenoxolone, sucralfate, bismuth subsalicylate); antiulcer agents (e.g. calcium carbonate, sodium bicarbonate, magnesium trisilicate, magaldrate, cimetidine, ranitidine, nizatidine, famotidine, omeprazole, pantoprazole); antihistamines (e.g. loratidine, diphenhydramine, chlorphenamine, triprolidine, acrivastine); antinausea agents (e.g. prochlorperazine, sumatriptan), bowel regulatory agents (e.g. diphenoxylate, loperamide, sennosides); antifungal agents (e.g. clotrimazole); antibiotics (e.g. fusafungine, tyrothricin) and antipsoriasis agents (e.g. dithranol, calcipotriol). One or more active pharmaceutical agents may be included.

The compositions of the present invention intended for use on the person may be intended simply to adhere to a bodily surface in order to treat a condition thereof. However, in the case of oesophageal surface it may additionally function to treat gastrointestinal stress, such as reflux oesophagitis, gastritis, dyspepsia or peptic ulceration. In this aspect of the present invention the composition therefore may also comprise a bicarbonate and optionally a cross-linking agent so that the composition which reaches the stomach will form a reflux inhibiting "raft". An especially preferred embodiment for such use may comprise a composition of the present invention, together with calcium carbonate and sodium bicarbonate, formulated to be drinkable.

A composition of any of the aspects of the invention may be used in a method of treating a patient. The composition may be adhered to a bodily surface of the patient. This may be done, for example, in order to prevent or alleviate a medical condition of the bodily surface. Alternatively or additionally it may be done in order to provide an active pharmacological agent to the patient transdermally.

In accordance with a ninth aspect there is provided the use of water, a first anionic polymer and a second anionic polymer in the manufacture of a composition as defined herein, for the treatment of a bodily surface in need of preventative or restorative treatment, or for transdermal delivery of an active pharmacological agent.

The invention will now be further described, by way of illustration with reference to the following experimental work.

## EXPERIMENTAL WORK

### Materials

Materials used for the production of biopolymer mixtures reported herein include the following.

|  | Grade | Supplier |
|---|---|---|
| Xanthan gum | Rhodigel® 80 | Caldic (UK) Ltd. Chesterfield, UK |
| Sodium alginate | Protanal® LFR 5/60 | FMC Biopolymer Drammen, Norway |
| Sodium alginate | Protanal® LF10L | FMC Biopolymer Drammen, Norway |
| Sodium alginate | Protanal® LF120L | FMC Biopolymer Drammen, Norway |
| Sodium alginate | Protanal® SF120 | FMC Biopolymer Drammen, Norway |
| Sodium alginate | Protanal® SF200 | FMC Biopolymer Drammen, Norway |
| Sodium alginate | Protanal® H120L | FMC Biopolymer Drammen, Norway |

The alginates differ from each other in molecular weight, and in relative proportion of mannuronic units and guluronic units. Details of these alginates are as follows.

| Alginate | $M_w$ | %G | %M |
|---|---|---|---|
| LFR 5/60 | 35,000 | 64% | 36% |
| LF10L | 75,000 | 45% | 55% |
| LF120L | 221,000 | 44% | 56% |
| SF120 | 195,000 | 69% | 31% |
| SF200 | 441,400 | 69% | 31% |
| H1201 | 404,000 | 46% | 54% |

$M_w$ (weight average molecular weight) values referred to below and elsewhere in this are as advised by suppliers but may be verified by the standard SEC-MALLS technique on readily available analyzer equipment.

PROTANAL LFR 5/60 was used unless otherwise stated.

Preparation of Polysaccharide mixtures

Throughout the experiments the formulations were prepared by combining concentrated stock solutions of the individual biopolymers. The xanthan stock solution contained 2% w/w xanthan (based on dry xanthan). The alginate stock solution contained 10% w/w alginate (based on dry alginate).

Formulations were prepared by combining an appropriate amount of each of the stock solutions and adding water as needed. When alginates of high viscosity were used the formulations were prepared using a Eurostar Power Control Viscometer, following the manufacturer's recommended procedures. All formulations were preferentially prepared the day before use, and were used within 36 hours. When not in use, all formulations were stored between 2 - 8°C.

Mütek PCD03 Particle Charge Detector - Polyelectrolyte titration

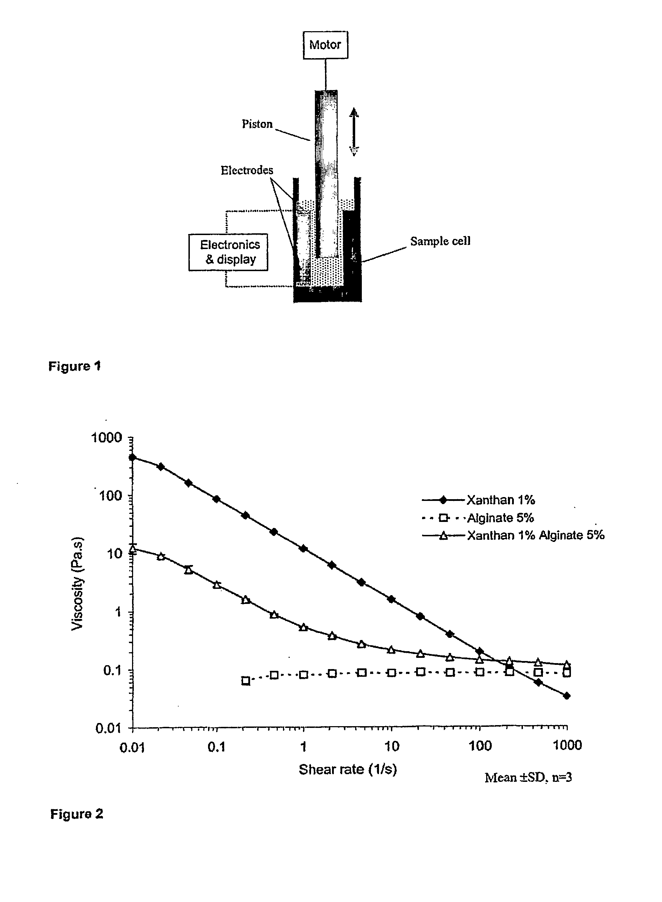

Many polymers carry electric charges balanced by counter ions. The local removal of these counter-ions by shear can generate a charge potential known as streaming potential. It is this phenomenon that the Mütek charge particle detector uses for its operation. The Mütek apparatus is shown in Fig. 1.

An aqueous sample is placed in a plastic measuring cell, the sample cell. Colloidally dissolved particles adsorb to the wall of the measuring cell using Van de Waals forces, with the counter-ions remaining relatively free. A fitted piston reciprocates in the measuring cell, shearing the counter-ions and creating a streaming potential.

A counter charged polyelectrolyte standard is added in defined aliquots to the sample. The polyelectrolyte binds to the polymer in the sample in a 1:1 charge ratio until the point of zero charge is reached. The point of zero charge can be used to establish the total amount of charge in an unknown solution.

Rheological assessments

All measurements were performed on a Bohlin C-VOR Rheometer at 25 °C using the cone & plate (4 °/40mm) geometry unless otherwise stated. The Bohlin C-VOR is a dual controlled stress and controlled strain rheometer.

Viscometry

Flow curves were prepared using different shear rates, these shear rates being indicative of a wide range of situations from sedimentation to mixing and shaking. The time set for thermal equilibration was 60 seconds. The reading for each shear rate was subject to a 30 s delay period prior to an integration period during which measurement took place.

For the tests whose results are shown in Fig. 2 16 shear rates were used, logarithmically spaced from 0.01 to 1000 $s^{-1}$, and the integration period was 30 seconds. For the other tests using this technique 12 shear periods were used, logarithmically spaced from 0.1 to 1000 s $^{-1}$, and the integration period was 60 seconds.

Dynamic oscillation

a) Amplitude sweep

To establish the linear viscoelastic region, an amplitude (strain) sweep was performed using shear stresses between 0.01 - 5 Pa. The frequency was fixed at 1 Hz.

b) Frequency sweep

Mixtures were studied using dynamic oscillatory viscometry to understand the structural properties of the biopolymer mixtures. Samples were subjected to frequency oscillations ranging from 0.1 to 3 Hz using a strain value found in the LVR from the amplitude sweep. All frequency sweeps were studied in triplicate.

Microscopy

a) Polarized brightfield microscopy

Samples were visualized on a Leica Diaplan microscope with dual polarisers. The polarisers were orientated at 90 ° to each other (crossed), one above and one below the sample.

The sample was covered with a cover slip to reduce solvent evaporation.

Establishment of the phase diagram

a) Polyelectrolyte titration

The polyelectrolyte titration was performed on the Mütek apparatus. Calibration curves were prepared for both xanthan and alginate. Aqueous stock solutions (0.1%) were prepared. These were diluted to yield calibration solutions ranging from 0.006% to 0.025%. Water references were also measured. These solutions were titrated against poly dimethyl diallyl ammonium chloride (Poly DADMAC) using an automatic Titrino titration device in 0.1 ml additions. The Mütek software calculated the end-point automatically. All Mütek titrations were performed in triplicate. Using the calibrations curves, the relative charges on the xanthan and alginate could be established.

Formulations were prepared using 1% w/w xanthan and 2, 2.5, 3, 3.5, 4, 5, 6, 8 and 10% w/w alginate. Aliquots (3 x 12g) were taken for each formulation, centrifuged (MSE Multex, 4000 rpm, 1 hour) and the resulting supernatant collected and weighed. A sample from each supernatant was analysed for moisture content using an Ohaus MB-45 moisture analyser. From the supernatant of each formulation, a sample for analysis was prepared such that the dry weight content of the biopolymer mixtures was approximately 0.01%. These were analysed using the Mütek apparatus. From the charge data obtained the relative compositions of each of the components could then be established.

## EXPERIMENTAL RESULTS - SET 1

Rheological assessments

Viscometry

The xanthan gum and sodium alginate used in these experiments exhibit expected viscosity profiles for such materials. Fig. 2 shows the viscosity profile of xanthan gum 1% and sodium alginate 5% in water with varying shear rates, along with a composition containing 1% xanthan and 5% sodium alginate in admixture. Xanthan gum alone exhibits a classical reduction in viscosity with increasing shear rate; whilst the grade of sodium alginate which was selected forms a more Newtonian like solution and does not significantly alter its viscosity with increasing shear rate. The mixture shows xanthan-like properties at low shear rates, with alginate-like properties becoming more pronounced at high shear rates.

Aqueous mixtures of xanthan and alginate

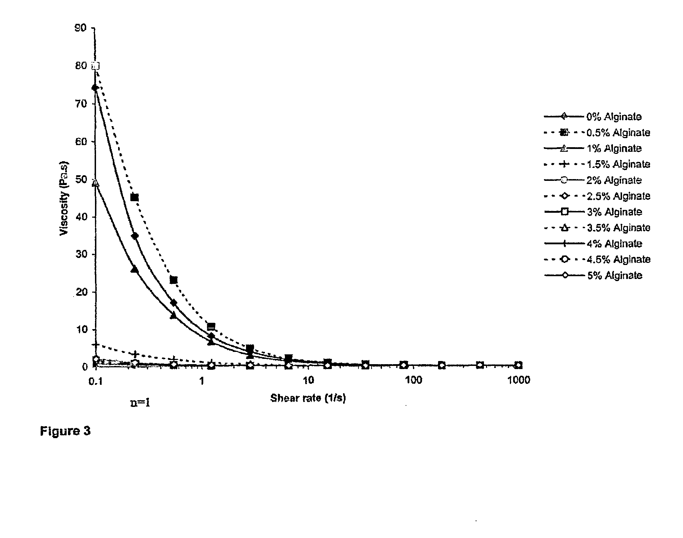

Solutions were prepared as described above. Formulations were made with xanthan at a fixed concentration (1% w/w) with varying concentrations of sodium alginate from 0 to 5% in 0.5% increments. Fig. 3 shows the effect of increasing shear rate on the viscosity of the formulations, and the effects of adding varying alginate to the formulations. It can be seen that with low concentrations of alginate the solutions exhibit the pseudoplasticity of xanthan gum. After the addition of a critical concentration of alginate, around 1% w/w, it can be seen that there is a dramatic change in this behaviour, and the viscosity at low shear rates is greatly reduced. As a consequence of this the ability to shear thin is not possible, making the formulations appear to behave more typically of alginate.

Phosphate buffered mixtures of xanthan and alginate

Formulations typically used in liquid medicines often have a buffering system for stability purposes , therefore a phosphate buffering system was also studied. The method described above was used to create similar systems to the aqueous formulations with the addition of monopotassium phosphate (0.1% w/w) and dipotassium phosphate (0.4% w/w).

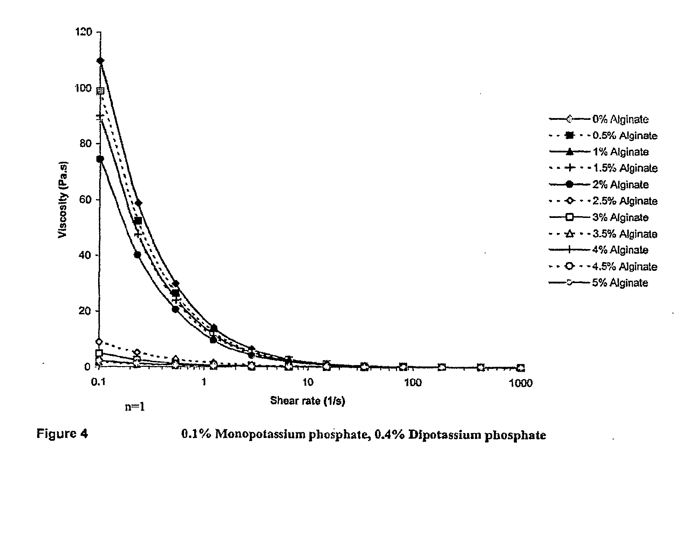

Fig. 4 shows the effects of shear rate and added alginate concentration on viscosity, for the buffered solutions. As in the purely aqueous systems it can be seen that there is a decrease in viscosity at low shear rates with increasing alginate concentration. In this case however the significant drop seems to occur after a concentration of 2% w/w alginate as opposed to 1% w/w in the purely aqueous system. When comparing Fig. 4 with Fig. 3 the initial viscosity of xanthan alone is greater by approximately 30 Pa.s.

Dynamic oscillation

Further to the viscosity properties studied, the dynamic properties of the formulations were investigated to look at the internal structure of the formulations in terms of their elastic properties. As with the viscosity studies the formulations were looked at both in the presence and absence of a phosphate buffer.

### Aqueous mixtures of xanthan and alginate

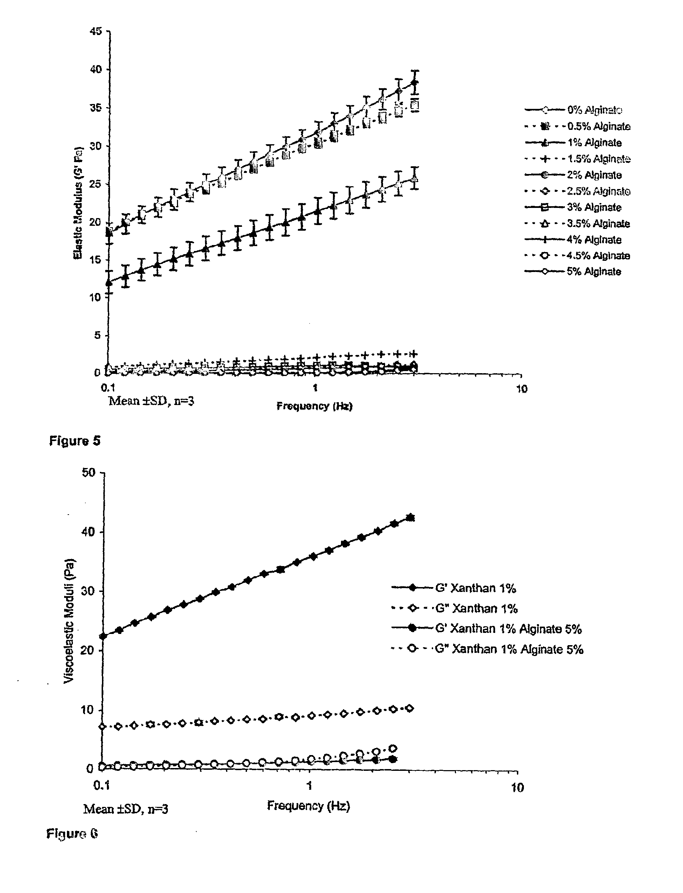

As previously mentioned dynamic oscillation rheology indicates the elastic and viscous properties. Fig. 5 shows the effects of increasing frequency of oscillation on elastic modulus (G') and also the effects of increasing alginate concentration.

Xanthan has a moderately high elastic modulus which increases with frequency suggesting an elastic structure. On addition of increasing amounts of alginate this elastic property diminishes, most notably after the addition of 1% alginate, where the elastic properties are lost and the elastic modulus tends to zero.

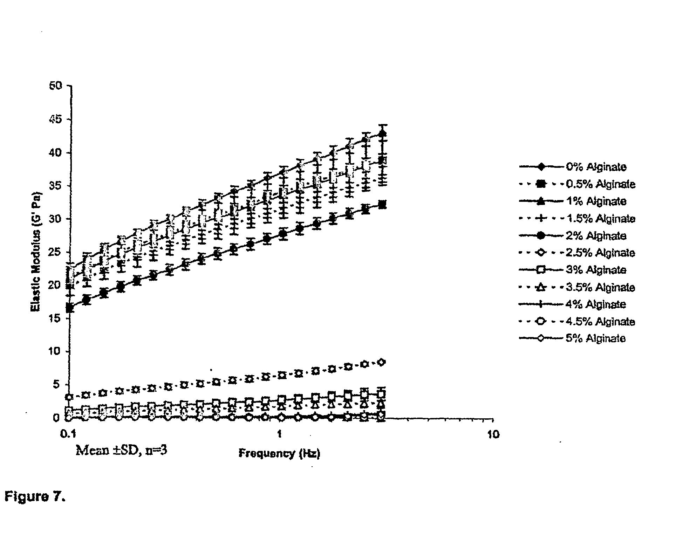

To look more closely at the dynamic properties both the viscous and elastic moduli were studied. Fig. 6 shows both moduli for the formulations studied, respectively containing 1% xanthan, and 1% xanthan with 5% alginate. It can be seen that for 1% xanthan G' is dominant confirming the elastic properties observed when handling the material. The formulation made from both xanthan and alginate shows much lower moduli with liquid like properties at the higher frequency.

### Phosphate buffered mixtures of xanthan and alginate

Fig. 7 shows the effects of the addition of a phosphate buffer (of the type and concentration described above) on the elastic modulus. As with the aqueous formulations there is a high elastic property in the xanthan formulation alone, which diminishes with increasing concentration of alginate. In this system however the loss of the elastic property occurs at a higher concentration of added alginate, typically above 2%. Comparing Fig. 7 with Fig. 5, the xanthan appears to have a greater elastic property in the phosphate buffered system than in the purely aqueous environment.

### Visualisation

### Polarized brightfield microscopy

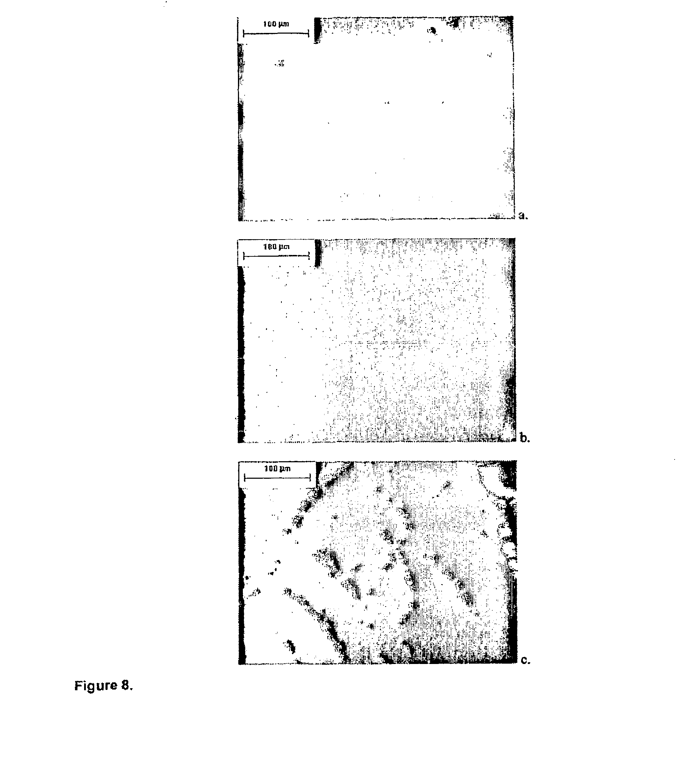

Polarized brightfield microscope images were taken using a Leica Diaplan microscope. Reference is made to Fig. 8 having images a. - c. Image a. is of xanthan 1% w/w; b. is of alginate 5%; and c. is of a mixture of xanthan 1% and alginate 5%. The images are between two crossed polarising filters.

There are no visible regions within the individual biopolymer solutions. There are distinct regions in the mixture of xanthan with alginate.

### Centrifugation

A sample each from of xanthan 1%, alginate 5% and a mixture of xanthan 1% with alginate 5% were centrifuged (4000 rpm, 1 hour, MSE Centaur II). A separation could clearly be seen in the mixed system.

### The phase diagram

### Polyelectrolyte titration

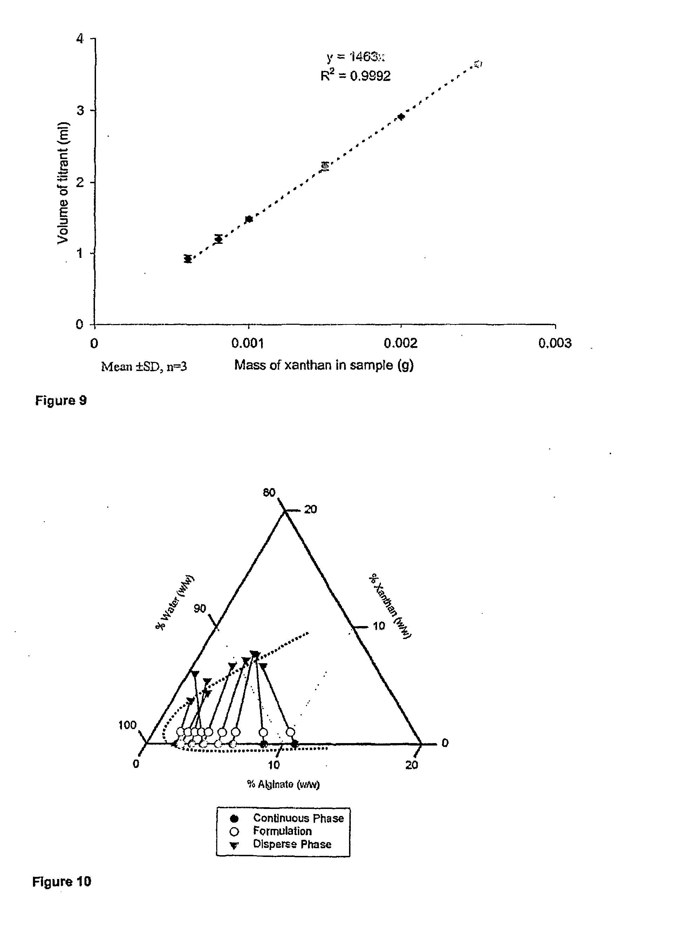

The Mütek apparatus was used to establish the composition of the segregated phases. Two calibration curves were performed, one on each of the component biopolymers in water against the titration standard, Poly DADMAC (see Fig. 9). From these curves it was possible to obtain the relative charges carried on each of the biopolymers to derive equations, {1} and {2}.

$$Volume\ of\ titrant\ (ml)\ =\ 1463\ x\ Wt\ of\ xanthan\ in$$
$$the\ sample\ (g) \qquad\qquad \{1\}$$
$$V\ =\ 1463X$$

$$Volume\ of\ titrant\ (ml)\ =\ 5095\ x\ Wt\ of\ alginate\ in$$
$$the\ sample\ (g) \qquad \{2\}$$
$$V\ =\ 5095A$$

Following analysis of the supernatant from each of the formulations for water content, it was possible to establish the dry weight of total biopolymer in the supernatant phase leading to equation {3}.

$$Total\ weight\ in\ sample\ (g)\ =\ Weight\ of\ xanthan\ (g)$$
$$+\ Weight\ of\ alginate\ (g) \qquad \{3\}$$
$$W\ =\ A\ +\ X$$

As the formulations were constructed from proportions of the biopolymers in water only it was possible to establish the relative amount of charge, and hence titrant volume required, in the mixtures by adding equations {1} and {2} together to yield equation {4}

$$\{4\}$$
$$V\ =\ 5095A\ +\ 1463X$$

With the knowledge of the total weight of biopolymer in the diluted supernatant and the volume of titrant required to neutralize the streaming potential of the diluted supernatant, equation {3} could be substituted into equation {4}. This would make it possible to determine the composition of the supernatant, and hence by subtraction from the overall composition, the composition of the precipitate.

Fig. 10 shows the phase diagram representing the compositions found using the Mütek apparatus. The shape of the graph indicates a segregative phase separation. The curved line represents the phase boundary. To the left of the curved line the mixtures are monophasic, within the curved line the mixture is biphasic.

Conclusion - Set 1

The Set 1 experiments indicate that above a critical concentration of alginate, a phase separation occurs. The point of when this separation occurs is modulated by the presence of potassium phosphates. The rheological assessments show that this phase separation affects the bulk solution properties of these formulations such that the elastic gel like structure of xanthan can be reduced to a non-elastic liquid system.

The polarized light microscopy studies have shown that the separation can be visualized and that classical areas of birefringence can be seen indicating anisotropic areas within a continuous phase.

The phase diagram indicates that the phase separation phenomena are relatively dependent on the alginate concentration and relatively independent of the xanthan concentration. The polyelectrolyte titration has revealed the phase diagram for xanthan and alginate in water exhibiting classical segregation behaviour.

Further thermal stability studies of the formulations suggest that this separation is stable to increased temperature as may be seen in a manufacturing process.

**EXPERIMENTAL RESULTS - SET 2**

Rapid Viscoanalyzer (Rk7A)

A Rapid Viscoanalyzer rotation viscometer from Newport Scientific operating at a fixed speed of 200 rpm was used to measure viscosity over time, at 25°C. The measurement was made after rotation for 600 seconds. In particular, it was used to compare the viscosity of parent formulations (which were phase separated) with those of diluted formulations (which were not).

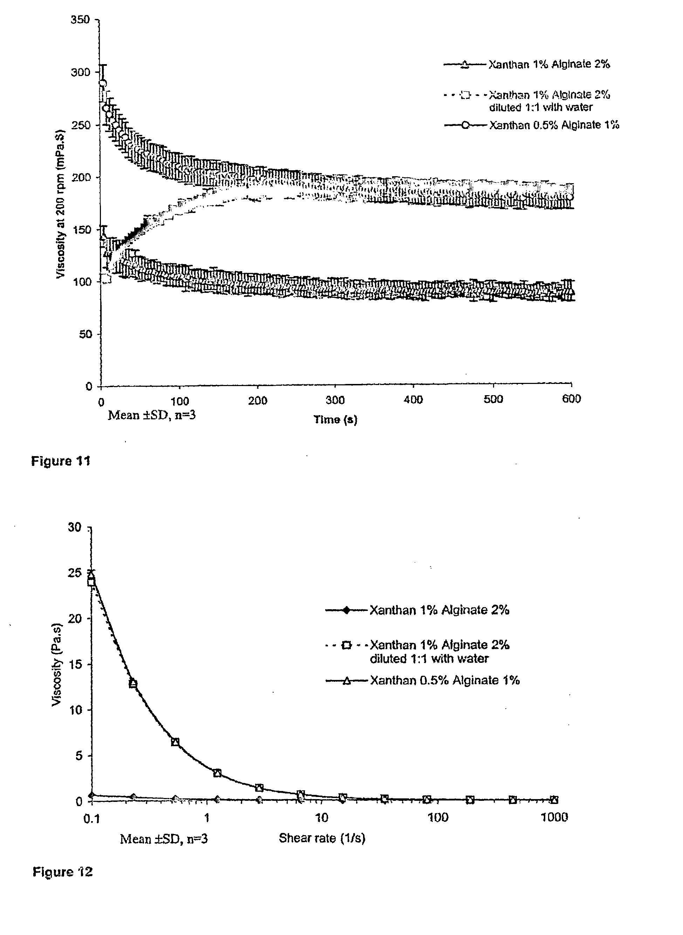

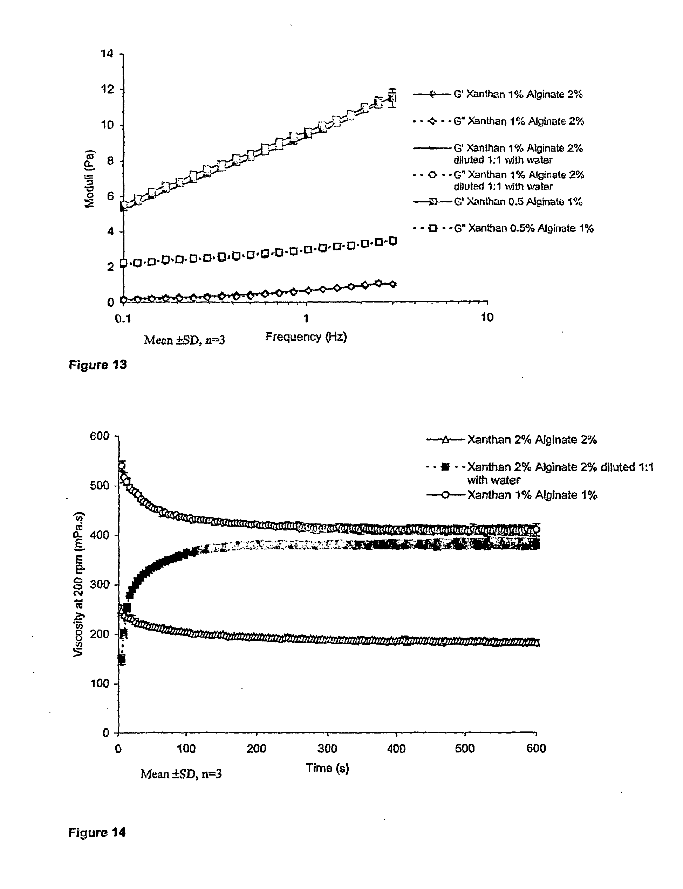

Figs. 11, 12 and 13 present viscosity-time results, viscosity-shear rate results and moduli-frequency results for one group of compositions.

Figs. 14-16 present viscosity-time results, viscosity-shear results and moduli-frequency results, for a further group of compositions, having double the xanthan content compared with the set whose results are presented in Figs. 11-13.

Conclusion - Set 2

The Set 2 results show that a composition which has undergone phase separation, and which is of liquid properties, may regain its high viscosity and viscoelastic properties, on dilution by water.

**EXPERIMENTAL RESULTS - SET 3**

Figs. 17 and 18 are plots showing elastic modulus against amount of alginate (1% xanthan; 1.02 Hz) for compositions without and with 0.5% sodium chloride.

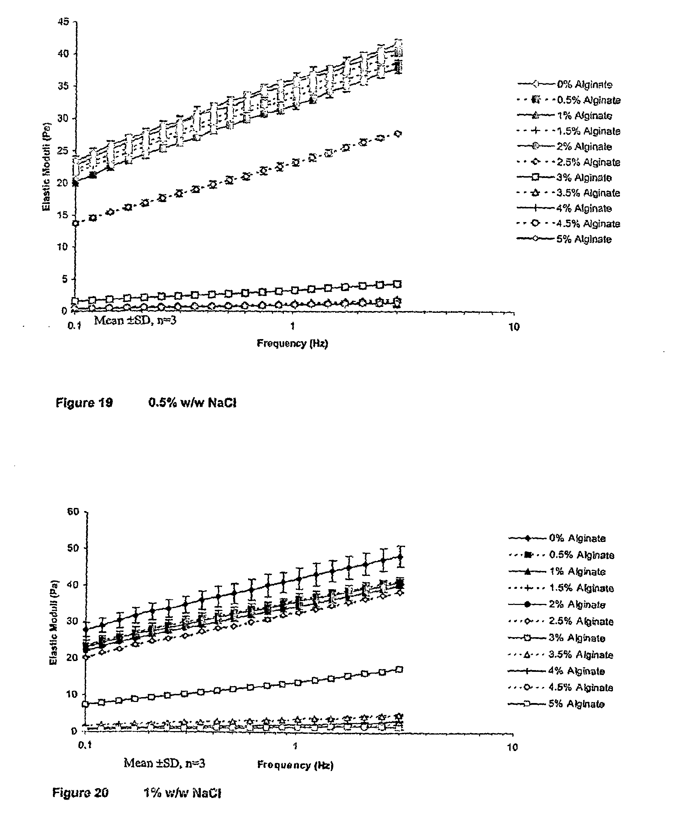

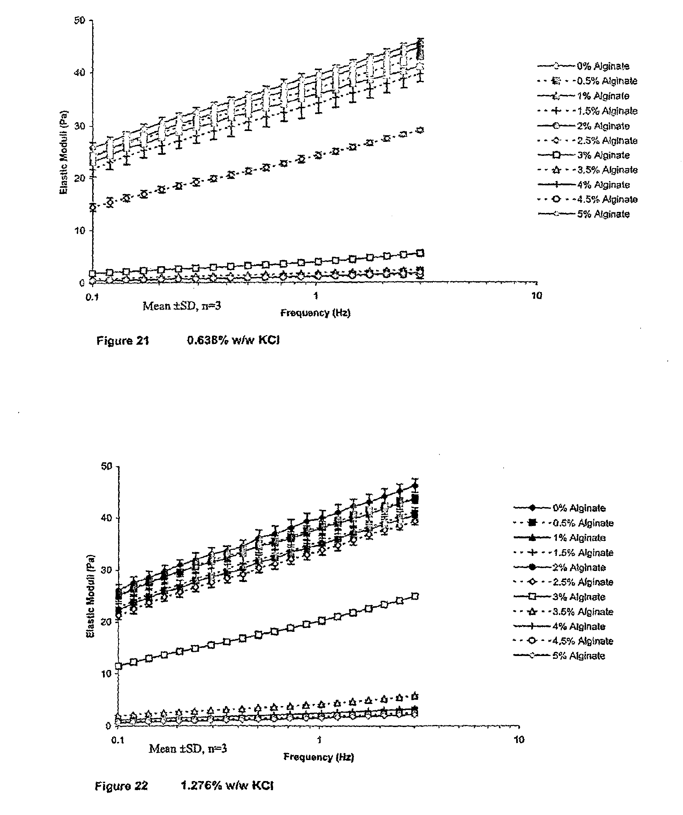

Figs. 19-22 are plots of elastic modulus against frequency of aqueous compositions containing 1% xanthan, (0-5% alginate; incremental steps of 0.5% alginate) and differing amounts of sodium chloride and potassium chloride (as indicated).

These results suggest that increasing the proportion of the salts increases the amount of alginate required to elicit phase separation (the increase found in these tests, broadly, being from 1-1.5% alginate to 2.5-3% alginate).

**EXPERIMENTAL RESULTS - SET 4**

In this set some of the work described above was repeated, using simulated gastric fluid instead of water.

Simulated Gastric Fluid USP (without enzymes) was freshly prepared.

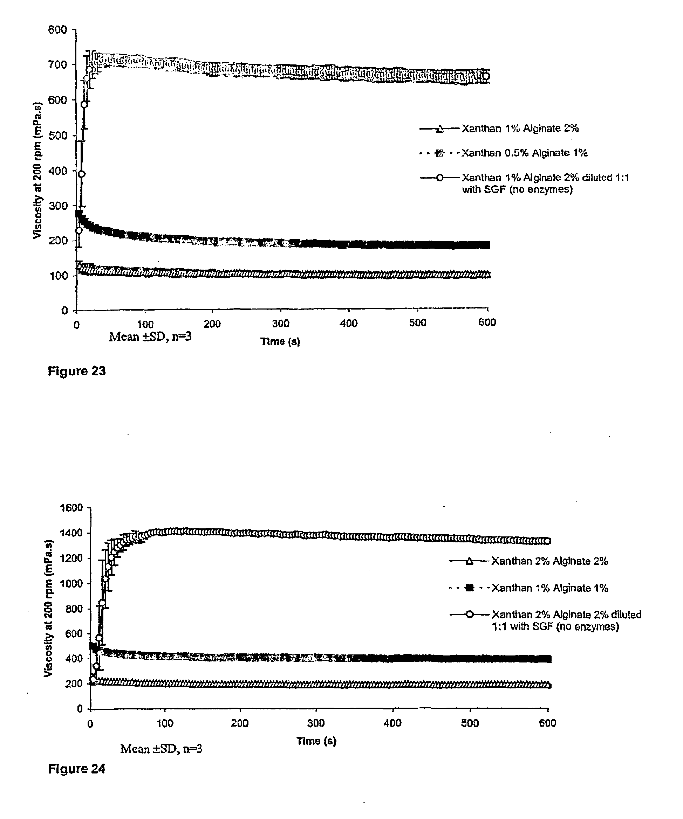

The viscosity of different alginate-xanthan solutions was measured as a function of time using the RVA apparatus and method described above. The results are presented in Figs. 23-25. It will be seen that the results suggest that dilution of alginate-xanthan formulations by Simulated Gastric Fluid (no enzymes) can increase viscosity, as it does when water is the diluent.

**EXPERIMENTAL RESULTS - SET 5**

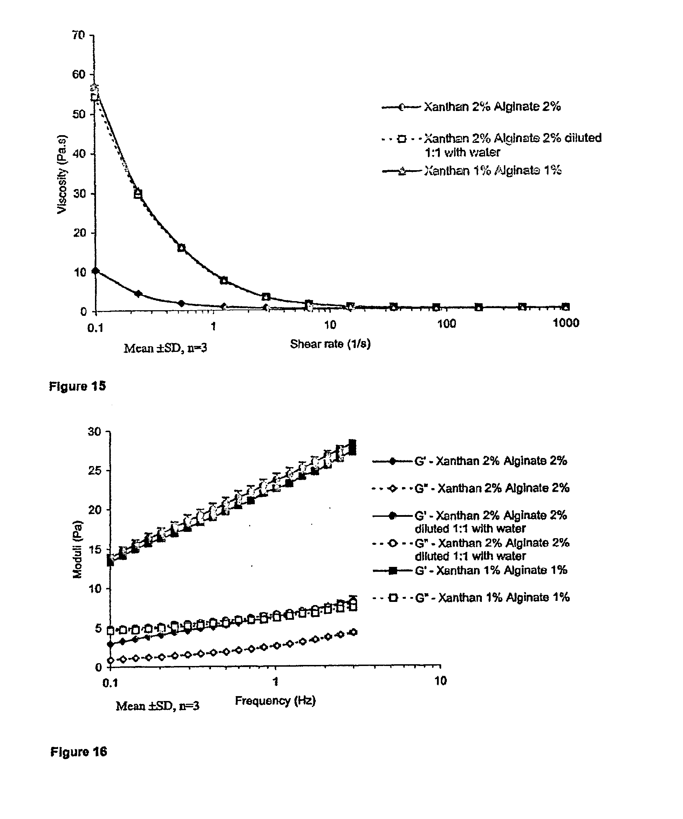

In this set the elastic modulus (G') of a xanthan-alginate-water mixture containing 1% xanthan and varying amounts of alginate, is measured in the range 0 to 5% by the method used previously and described above, at a frequency of 1.02 Hz. The difference from the experiment whose results are shown in Fig. 16 is that a different grade of alginate was used, PROTANAL LF10L.

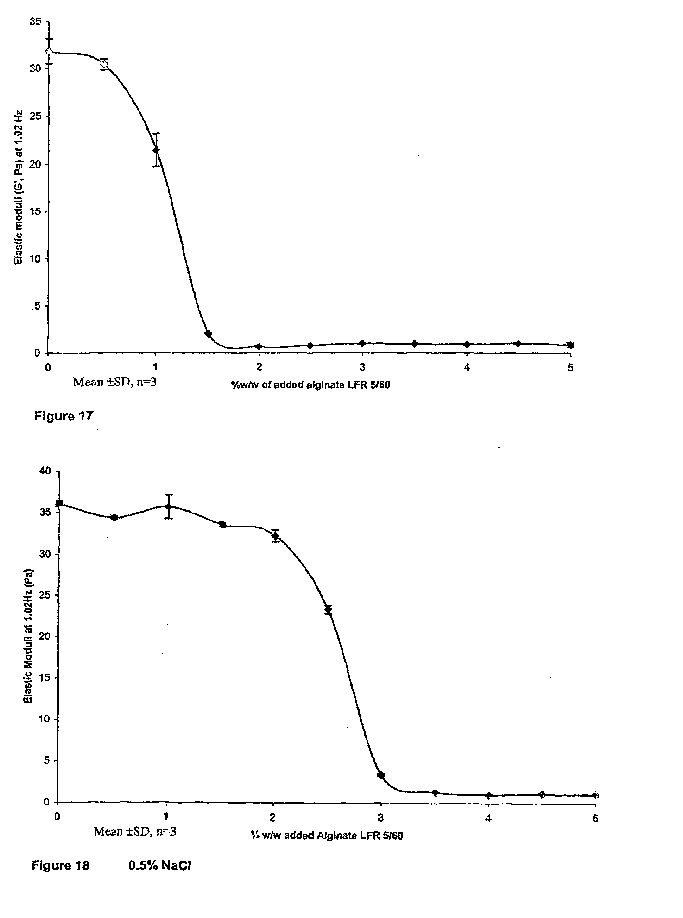

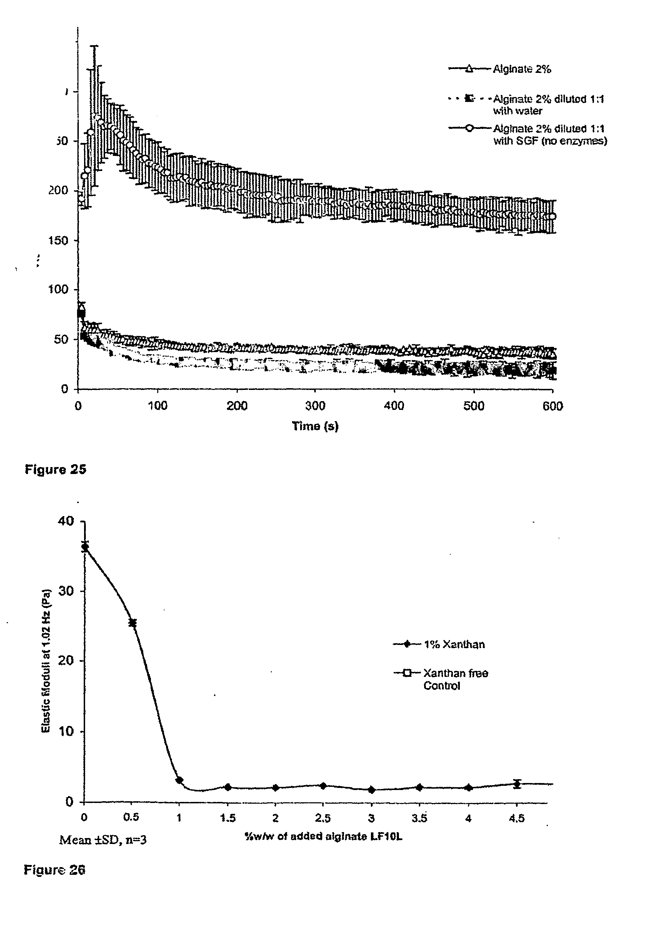

As can be seen from Fig. 26, and from comparison with Fig. 17, there is again evidence for a heterogeneoushomogeneous transition, at somewhat lower alginate concentration, and over a smaller range of alginate concentrations.

**EXPERIMENTAL RESULTS - SET 6**

In this set work described above was carried out, using a wider range of alginates, and the relationship between elastic modulus (1% xanthan; 1.02 Hz) and percentage of added alginate was plotted.

The alginates tested were:

Protanal LFR 5/60 (BN: S13081)
Protanal LF10L (BN: 840017)
Protanal LF120L (BN: 907788)
Protanal SF120 (BN: 907114)
Protanal SF200 (BN: 910152)
Protanal H120L (BN: 240304)

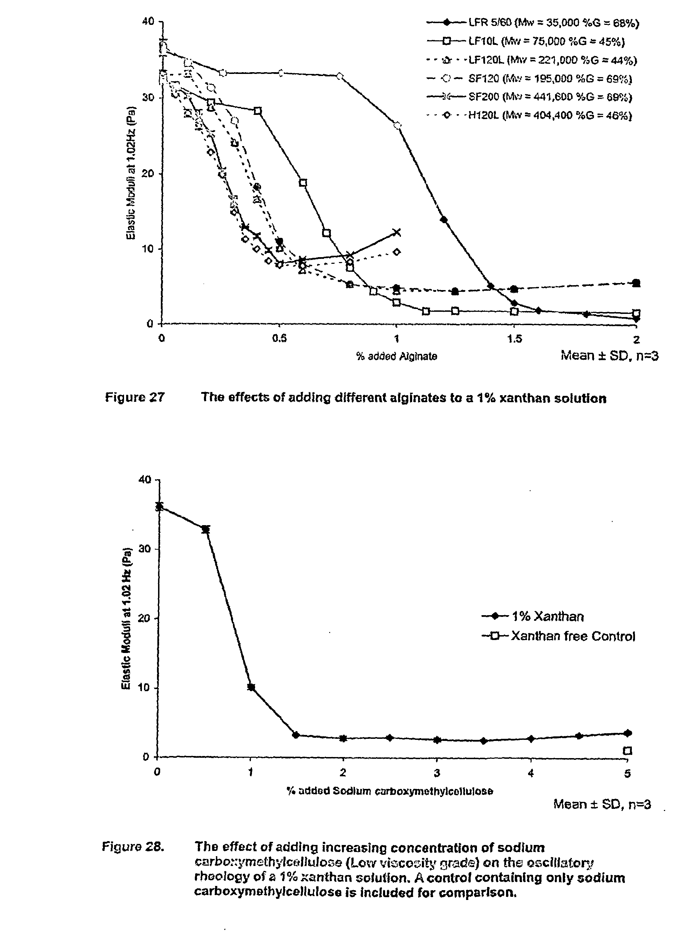

All alginates supplied by FMC Biopolymer Drammen, Norway The results are shown in Fig. 27. In each case an abrupt reduction in elastic modulus is seen, with increasing alginate concentration.

The abrupt reduction takes place at lower alginate concentrations when higher molecular weight alginates are used, and at higher alginate concentrations when lower molecular weight alginate concentrations are used. Phase separation was visible by microscopy and by centrifugation for each alginate, at some point along the graph shown.

The principal conclusions were that increasing the alginate molecular weight reduces the concentration required to elicit separation with xanthan; and that there appears to be no significant difference between whether a mannuronate-dominant or guluronate-dominant alginate is used.

## EXPERIMENTAL RESULTS - SET 7

In this set the experimental work was as described above, except that the alginate was replaced by another anionic polysaccharide, sodium carboxymethylcellulose (Low Viscosity Grade BN 32K0007), from Sigma Aldrich Chemical Company, Dorset, UK.

Test solutions were produced using the previously described technique whereby concentrated stock solutions were prepared and combined in appropriate quantities adding water where appropriate. The concentrated sodium carboxymethylcellulose (NaCMC) was prepared by dispersion at 500rpm for 20 minutes Xanthan was used at a concentration of 1%, and rheological studies again employed a frequency of 1.02 Hz.

The results are shown in Fig. 28.

Microscopic separation was first visible at 0.4% added NaCMC, and macroscopic (centrifugation) separation was first visible at 1.25% added NaCMC.

Similar tests were carried out, but to assess the effects of dilution using water and SGF (as previously described), but using a different polymer, sodium carboxymethyl cellulose.

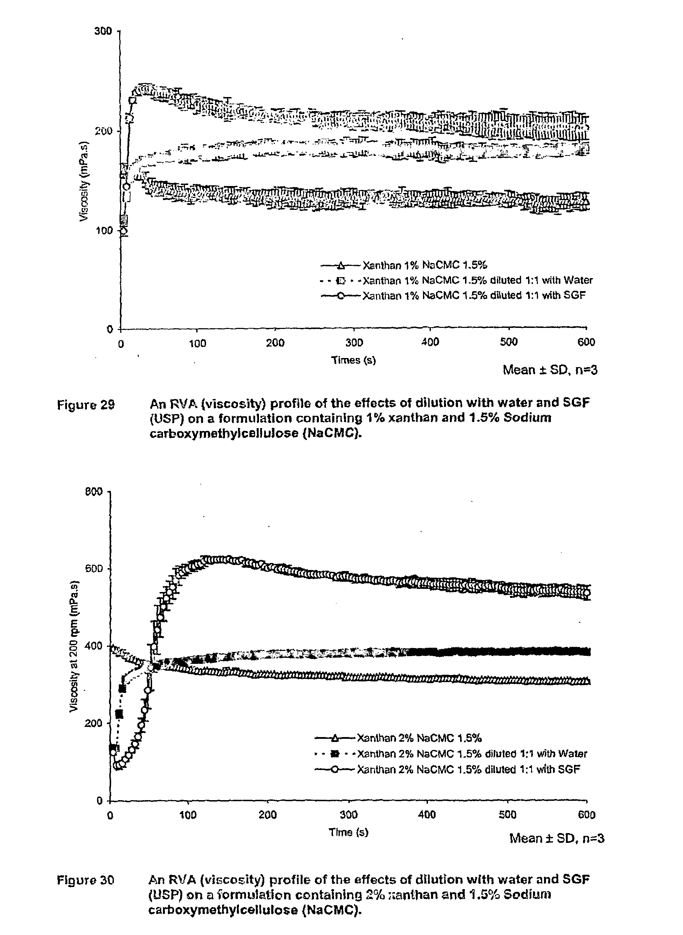

The results are shown in Figures 29 and 30.

Our principal conclusions were as follows:

the addition of sufficient sodium carboxymethylcellulose elicits phase separation, in the same manner seen previously with alginate;

after phase separation, the mixture exhibits predominantly viscous behaviour similar to that of a sodium carboxymethylcellulose solution;

dilution with water elicits a rise in viscosity as shown previously with alginate;

dilution with SGF elicits a rise in viscosity as shown previously with alginate;

the viscosity rise on dilution of the mixture with SGF is greater than the viscosity rise on dilution with water; and

the percentage increase in viscosity with sodium carboxymethylcellulose is generally lower that that of the Protanal LFR 5/60 system.

Overall this data suggested that sodium carboxymethylcellulose behaves in a similar way to alginate, when mixed with xanthan in an aqueous system.

## EXPERIMENTAL RESULTS - SET 8

Similar tests were carried out to establish whether some common pharmaceutical excipients (other than ionic species) have any effect on the xanthan-alginate system. The excipients were D-sorbitol (Sigma Ultra Grade BN: 051K0005); sucrose (Sigma Ultra Grade BN: 22K0065); and glycerol (Sigma Ultra Grade BN: 121K0021). All were from Sigma Aldrich Chemical Company, Dorset, UK.

Solutions were prepared as described previously. The excipients were added to the xanthan stock solution.

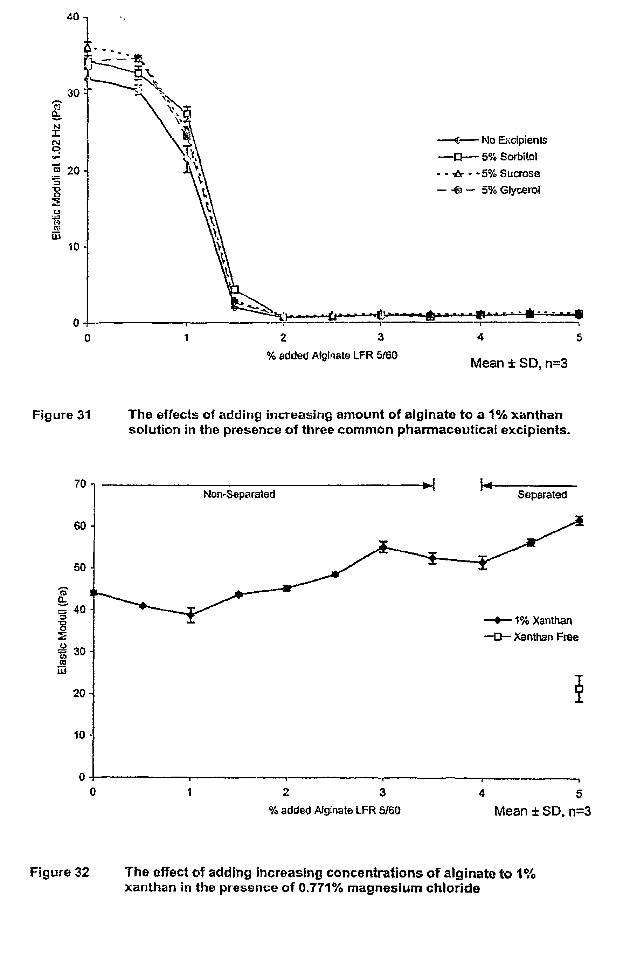

The results of rheology testing are shown in Fig. 31.

Our principal conclusion was that the addition of sorbitol, sucrose, or glycerol at concentrations of 5% has no significant effect on the behaviour of the xanthan-alginate mixed system.

## EXPERIMENTAL RESULTS - SET 9

Similar tests were carried out to see if adding a divalent salt had a similar effect to a monovalent salt on the xanthan alginate mixed system (see Experimental Results - Set 3)

Calcium salts were avoided as there is extensive evidence that calcium causes gelation in alginate systems whereas magnesium salts have been shown not to. The salt selected was magnesium chloride hexahydrate (Sigma Ultra Grade BN: 072K0063, Sigma Chemical Company). This was added to the xanthan stock solution in the same fashion as sodium chloride was added previously.

The concentration of 0.771% (calculated as anhydrous salt) was chosen to make the number of available positive charges equivalent to 1% sodium chloride.

The solutions were visualised using a microscope, as previously described.

The results are shown in Fig. 32.

Phase separation still occurred, at 3.5-4% of alginate.

In a second experiment the amount of magnesium chloride was changed, and the rheological properties assessed. The experiment was the same as described above, except for variation in the magnesium chloride concentration.

A 10% alginate stock solution was prepared as previously described. A 4% magnesium chloride (as anhydrous) stock solution was also prepared. (500rpm, 10 minutes). These were mixed in appropriate proportions to achieve the desired mixtures adding water as necessary. These were mixed at 1000rpm for 5 minutes and left overnight prior to rheological testing. When loading these samples care was taken not to damage the samples at the time of placing the solutions on the rheometer.

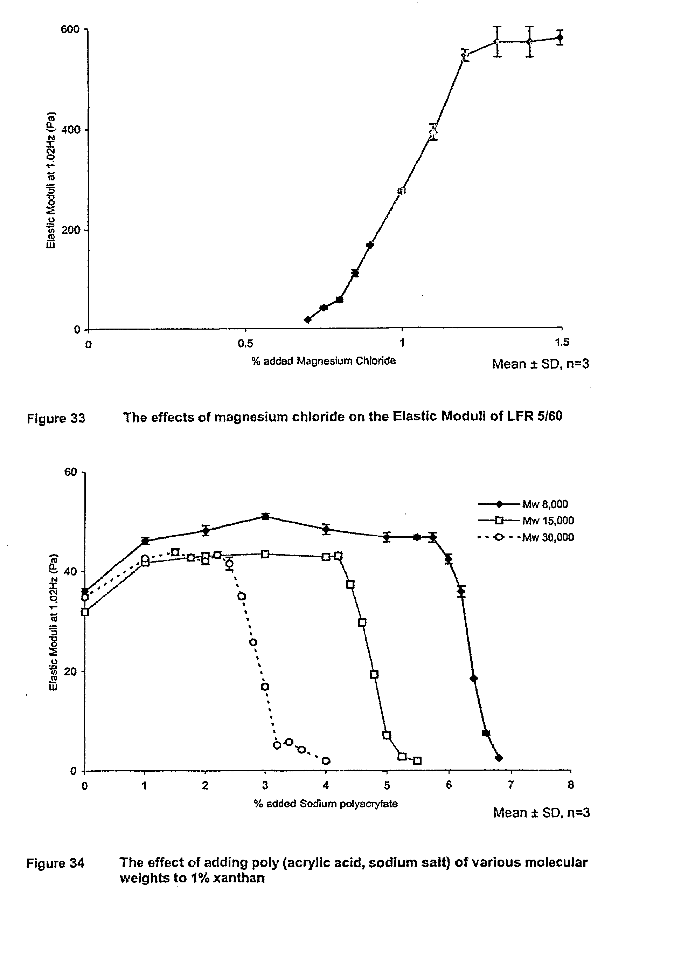

The results are shown in Fig. 33.

Our principal conclusions from this work on magnesium chloride are:

xanthan and alginate appear to separate in the normal way in the presence of magnesium chloride;

however the presence of magnesium chloride seems to prevent the marked decrease in elastic properties, normally observed in a salt-free system;

the addition of magnesium chloride to alginate seems to induce gelation in a concentration-dependent manner, above a threshold concentration of 0.5%;

the gelation properties are difficult to reproduce at high magnesium concentration (>1.5%) resulting in large error bars (this could be due to difficulty in avoiding damage to the gel when putting the sample on the rheometer); and

the gelation properties seem to reach a maximum at 1.2% added magnesium chloride.

## EXPERIMENTAL RESULTS - SET 10

The effect of replacing alginate by sodium polyacrylate (NaPAA) - poly(acrylic acid, sodium salt) - was studied. The grades used were:

poly(acrylic acid, sodium salt) ($M_w$ 30,000 as a 40% wt solution.) BN: 03323DO

poly(acrylic acid, sodium salt) ($M_w$ 15,000 as a 35% wt solution.) BN: 05206CA

poly(acrylic acid, sodium salt) ($M_w$ 8,000 as a 45% wt solution) BN: 032224KF

All were from the Aldrich Chemical Company Inc. Milwaukee, USA.

The moisture content of the poly (acrylic acid, sodium salt) solutions was accurately determined by drying samples of each of the solutions in vacuo over phosphorous pentoxide (BN:0258497 Fisher Scientific, Loughborough, UK), in triplicate, until constant weight was achieved.

NaPAA stock solution was prepared by partially diluting the proprietary solution at 500rpm for 10 minutes.

The stock solutions were then combined in the usual manner (1000rpm 5 minutes).

The results are shown in Fig. 34.

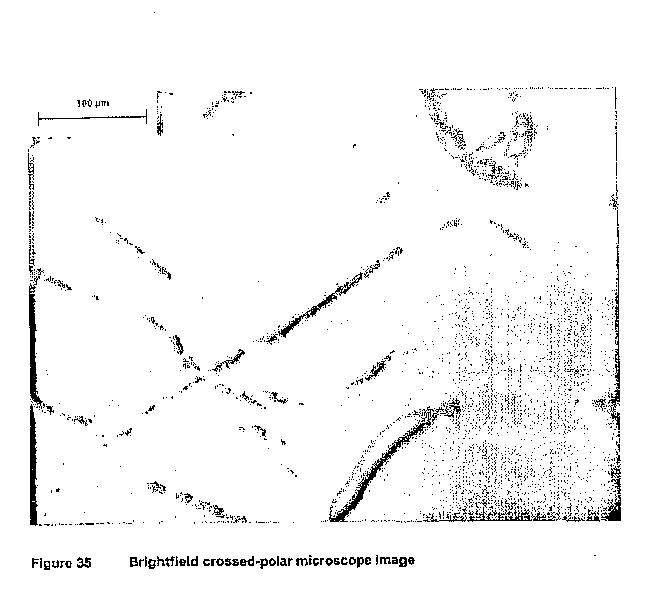

Fig. 35 is a microscope image of the material, once phase separated, and shows strands in a matrix.

The principal conclusions we drew were that polyacrylate sodium elicits phase separation in a similar manner to alginate, and yields a microstructure of similar appearance; and that increasing molecular weight decreases the concentration required to elicit separation in a similar fashion to that shown with the alginate.

Further tests were carried out to monitor the effects of dilution on xanthan/sodium poly acrylic acid mixtures, to provide a comparison to alginate.

The formulations were chosen as the first known concentration of polyacrylate to reduce the elastic modulus of the mixture to 10% of that of 1% xanthan (i.e. first point where G' is less than 3-3.5 Pa).

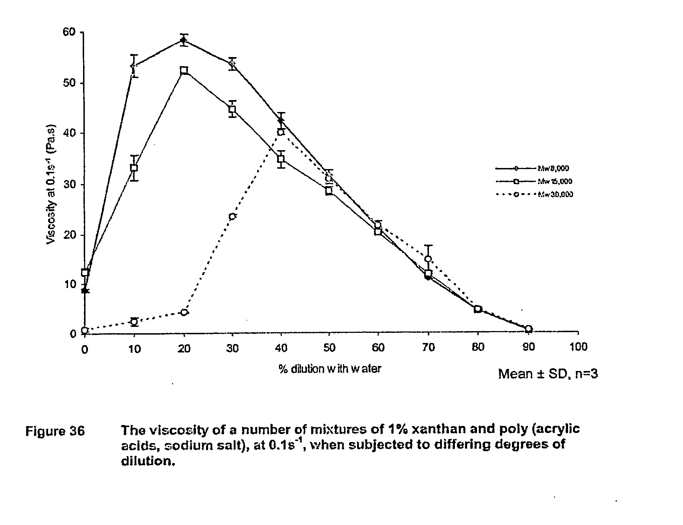

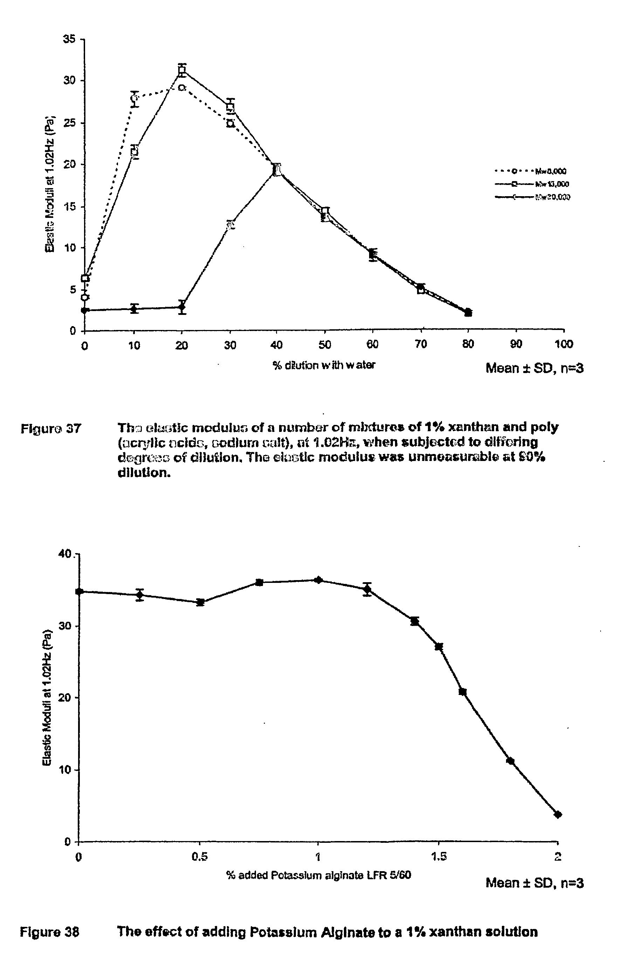

The results are shown in Figs. 36 and 37.

The principal conclusions we drew were:

dilution with water can increase viscosity, in a similar fashion to that shown with alginate;

by using a lower molecular weight polymer the dilution profile appears to become more preferential;

polyacrylate sodium offers an alternative to alginate for this system; and

the 8,000 M$_w$ sample provides the potential for a system that requires only a small dilution to trigger the viscosity increase. This offers the opportunity of a product where the point at which viscosity increase can be tightly controlled.

## EXPERIMENTAL RESULTS - SET 11

Further experiments were undertaken, to study whether the polymer used must be specifically the sodium salt or whether a different counter ion could be used. The material studied was potassium protanal LFR5/60 (Research sample) BN: 2110995, from FMC Biopolymer Drammen, Norway. The methods used were as previously described for the sodium salt of LFR 5/60.
The results are shown in Fig. 38.
The principal conclusion is that the separation is seen with potassium alginate as well as sodium alginate.

## EXPERIMENTAL RESULTS - SET 12

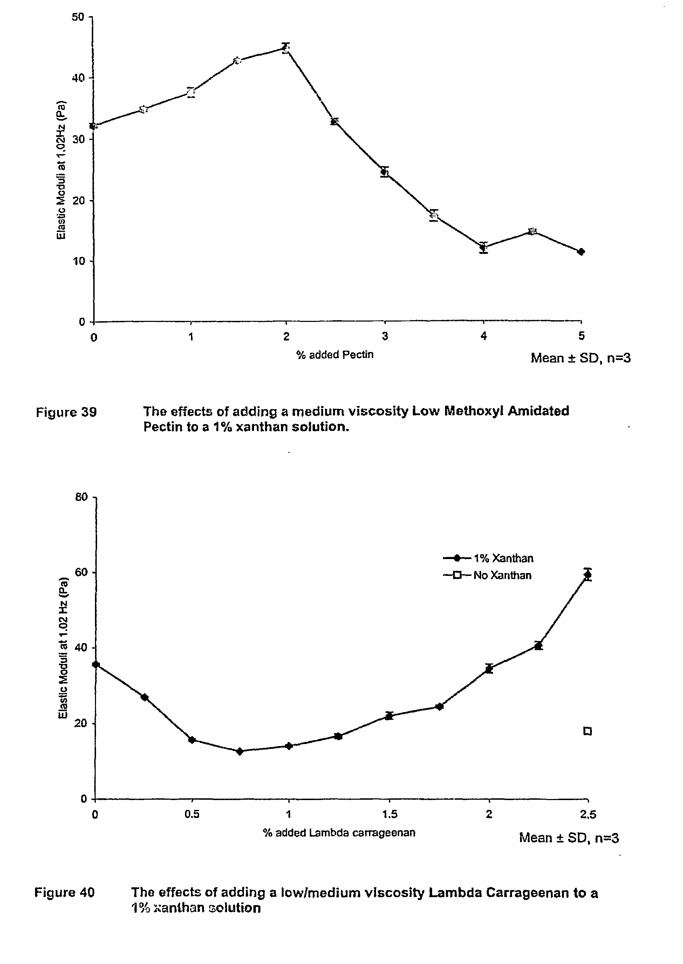

The effect of adding Low Methoxyl Amidated (LMA) pectin to xanthan gum was studied. The aim was to establish a greater library of polysaccharides that will induce separation. The pectin derivative used was Unipectine OG 903 CS BN:20741401/1 (Degussa Texturant Systems, Newbury, UK).
Solution preparation: The requisite amount of water was heated to 80 °C using an in house built water jacket attached to a Haake C25 water bath with an F8 circulator/controller attachment. The water was allowed to equilibrate for 5 minutes. The pectin was then dispersed into the hot water in the usual fashion at 500rpm for 15 minutes. After 15 minutes the temperature controller was set to 20 °C and the stirrer set to 50rpm. This was left until the solution had cooled to room temperature. The xanthan was as previous.
The mixtures were prepared with alginate as described above.
The results are shown in Fig. 39.
Viewed through a cross polarized light microscope, phase separation was seen (at 5% pectin derivative).
The principal conclusions were that LMA pectin is added to xanthan, separation still occurs; and the addition of LMA pectin causes a drop in elastic behaviour, similar to that seen with the alginate system.

## EXPERIMENTAL RESULTS - SET 13

The effect of adding a Lambda carrageenan to xanthan was studied, with the aim to establish a greater library of polysaccharides that will induce separation. The carrageenan material used was Viscarin GP 109F BN: 50502110 (FMC Biopolymer, Philadelphia, USA).
Solutions were prepared in a similar fashion to alginate. However the carrageenan solutions were dispersed at 1000rpm for 30 minutes.
The results are shown in Fig. 40.
Viewed through a cross polarized light microscope, phase separation was seen, at 2.5% carrageenan.
The principal conclusions were:

the addition of carrageenan to xanthan elicits separation;

the addition of carrageenan causes a drop in elastic behaviour, similar to that seen with the alginate systems; and

with increasing concentrations of carrageenan, above about 0.75%, comes an increase in elastic modulus. This is similar to the results seen with the high molecular weight alginates (e.g. Protanal H120L).

## EXPERIMENTAL RESULTS - SET 14

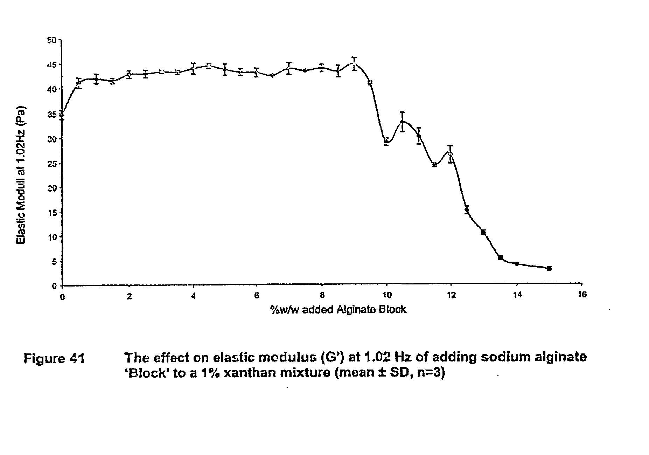

In a preliminary test, a very low molecular weight sodium alginate "Block", M$_w$ 1,500, was used to make a series of compositions with 1% xanthan (Rhodigel 80) and water, to see whether such compositions showed similar behaviour to that described above.
The elastic modulus of a number of samples was measured, and the results plotted in Fig. 41.

It can be seen from Fig. 41 that there was a very large drop in elastic modulus at relatively high levels of the alginate; in the region of 9 to 14% w/w alginate. The indication is that the behaviour was akin to that of the other samples, but that it may require a higher concentration of alginate to exploit the heterogeneous/homogeneous change of microstructure.

## Claims

1.  A composition comprising water, a first anionic polymer and a second anionic polymer, the polymers being such that on admixture of the composition with further water a diluted composition of increased viscosity is produced, **characterised in that** the composition has a viscosity, prior to said admixture with water, not in excess of 500 mPa.s. (shear rate 1s$^{-1}$; 25°C).

2.  A composition as claimed in claim 1, wherein the composition contains at least 0.2% w/w of the first and/or second anionic polymer (before any said admixture with further water).

3.  A composition as claimed in claim 1 or 2, wherein the composition contains up to 20% w/w of the first and/or second anionic polymer (before any said admixture with further water).

4.  A composition as claimed in any preceding claim, wherein the first anionic polymer is xanthan.

5.  A composition as claimed in any preceding claim, where the second anionic polymer is selected from an alginate, a carboxymethyl cellulose, an acrylate polymer, a carrageenan and a pectin.

6.  A composition as claimed in any preceding claim, wherein the composition contains at least 90% w/w water.

7.  A composition as claimed in any preceding claim, the concentration of first anionic polymer and second anionic polymer being such that a diluted composition of increased viscosity is obtainable by mixing 1 volume of the composition with a volume of water in the range 0.1-5 parts by volume.

8.  A composition as claimed in any preceding claim, wherein the (original, undiluted) composition is of substantially heterogenous microstructure.

9.  A composition as claimed in any preceding claim, wherein the diluted composition is of homogeneous microstructure.

10. A composition as claimed in claim 8, wherein the first anionic polymer is xanthan and the heterogeneous microstructure comprises xanthan-rich strands in a matrix rich in the second anionic polymer.

11. A composition as claimed in any preceding claim, where the composition has a viscosity, prior to said admixture with water, not in excess of 250 mPa. s. (shear rate 1s$^{-1}$; 25°C).

12. A composition as claimed in any preceding claim, wherein the composition has the property that it undergoes an increase in viscosity of at least 50 mPa.s. (shear rate 1s$^{-1}$; 25°C) on admixture with an equal volume of water.

13. A composition as claimed in claim 12, wherein the composition has the property that it undergoes an increase in viscosity of at least 100 mPa.s. (shear rate 1s$^{-1}$; 25°C) on admixture with an equal volume of water.

14. A composition of water, a first anionic polymer, namely xanthan, and a second anionic polymer selected from an alginate, a carboxymethyl cellulose, an acrylate, a pectin and a carrageenan, wherein the microstructure comprises xanthan-rich strands in a matrix liquid rich in the second anionic polymer, wherein the composition has a viscosity, prior to said admixture with water, not in excess of 500 mPa.s. (shear rate 1s$^{-1}$; 25°C).

15. A composition comprising water, 0.2-5% w/w of a first anionic polymer and 0.2-5% w/w of a second anionic polymer, the composition having the following characteristics:

    a) up to a threshold value of second anionic polymer within the range stated above, the composition is of elastic behaviour,
    b) beyond that threshold value, the composition is of viscous behaviour,

c) beyond that threshold value, the composition may be rendered elastic in its behaviour by admixture of further water; and

d) the composition has a viscosity, prior to said admixture with water, not in excess of 500 mPa·s. (shear rate $1s^{-1}$; 25°C).

**16.** A composition comprising water, 0.2-5% w/w of a first anionic polymer and 0.2-5% w/w of a second anionic polymer, the composition having the following characteristics:

a) up to a threshold value of second anionic polymer within the range stated above, the composition is a homogeneous composition,

b) beyond that threshold value the composition is a heterogeneous composition,

c) beyond that threshold value, the composition may be rendered homogeneous by admixture with further water; and

d) the composition has a viscosity, prior to said admixture with water, not in excess of 500 mPa.s. (shear rate $1s^{-1}$; 25°C)

**17.** A composition comprising water, 0.2-5% w/w of a first anionic polymer and 0.2-5% w/w of a second anionic polymer, the composition having the following characteristics:

a) up to a threshold value of a second anionic polymer within the range stated above, the composition has a viscosity of at least 1 Pa.s,

b) beyond that threshold value, the composition has a viscosity at least 50 mPa.s lower than in a),

c) beyond that threshold value, the composition may be rendered more viscous than in b) by at least 50 mPa.s. by admixture with further water, and

d) the composition has a viscosity, prior to said admixture with water, not in excess of 500 mPa.s. (shear rate $1s^{-1}$; 25°C).

**18.** A method of thickening a composition as claimed in any preceding claim, which method comprises admixing the composition with water at, or shortly before delivery to, a desired location of use, to yield a diluted, thickened composition.

**Patentansprüche**

**1.** Zusammensetzung, umfassend Wasser, ein erstes anionisches Polymer und ein zweites anionisches Polymer, wobei die Polymere derart sind, dass durch Zusammenmischung mit der Zusammensetzung mit weiterem Wasser eine verdünnte Zusammensetzung mit erhöhter Viskosität hergestellt wird, **dadurch gekennzeichnet, dass** die Zusammensetzung vor der Zusammenmischung mit Wasser eine Viskosität nicht über 500 mPa.s. (Scherrate 1 s$^{-1}$; 25°C) aufweist.

**2.** Zusammensetzung nach Anspruch 1, wobei die Zusammensetzung mindestens 0,2 Gew.-% des ersten und/oder des zweiten anionischen Polymers enthält (vor jeglicher Zusammenmischung mit Wasser).

**3.** Zusammensetzung nach Anspruch 1 oder 2, wobei die Zusammensetzung bis zu 20 Gew.-% des ersten und/oder zweiten anionischen Polymers enthält (vor jeglicher Zusammenmischung mit Wasser).

**4.** Zusammensetzung nach einem der vorangehenden Ansprüche, wobei das erste anionische Polymer Xanthan ist.

**5.** Zusammensetzung nach einem der vorangehenden Ansprüche, wobei das zweite anionische Polymer ausgewählt ist aus einem Alginat, einer Carboxymethylcellulose, einem Acrylatpolymer, einem Carrageenan und einem Pektin.

**6.** Zusammensetzung nach einem der vorangehenden Ansprüche, wobei die Zusammensetzung mindestens 90 Gew.-% Wasser enthält.

**7.** Zusammensetzung nach einem der vorangehenden Ansprüche, wobei die Konzentration an erstem anionischen Polymer und zweitem anionischen Polymer derart ist, dass durch Mischen von 1 Volumen der Zusammensetzung mit einem Wasservolumen im Bereich von 0,1-5 Volumenteilen eine verdünnte Zusammensetzung mit erhöhter Viskosität erhältlich ist.

8. Zusammensetzung nach einem der vorangehenden Ansprüche, wobei die (ursprüngliche, unverdünnte) Zusammensetzung eine im Wesentlichen heterogene Mikrostruktur aufweist.

9. Zusammensetzung nach einem der vorangehenden Ansprüche, wobei die verdünnte Zusammensetzung eine im Wesentlichen homogene Mikrostruktur aufweist.

10. Zusammensetzung nach Anspruch 8, wobei das erste anionische Polymer Xanthan ist und die heterogene Mikrostruktur in einer an zweitem anionischem Polymer reichen Matrix Xanthan-reiche Stränge umfasst.

11. Zusammensetzung nach einem der vorangehenden Ansprüche, wobei die Zusammensetzung vor der Zusammenmischung mit Wasser eine Viskosität nicht über 250 mPa.s. (Scherrate 1 s$^{-1}$; 25°C) aufweist.

12. Zusammensetzung nach einem der vorangehenden Ansprüche, wobei die Zusammensetzung die Eigenschaft aufweist, dass sie durch Zusammenmischung mit einem gleichen Wasservolumen eine Viskositätserhöhung von mindestens 50 mPa·s. (Scherrate 1 s$^{-1}$; 25°C) erfährt.

13. Zusammensetzung nach Anspruch 12, wobei die Zusammensetzung die Eigenschaft aufweist, dass sie durch Zusammenmischung mit einem gleichen Wasservolumen eine Viskositätserhöhung von mindestens 100 mPa.s. (Scherrate 1 s$^{-1}$; 25°C) erfährt.

14. Zusammensetzung aus Wasser, einem ersten anionischen Polymer, nämlich Xanthan, und einem zweiten anionischen Polymer, ausgewählt aus einem Alginat, einer Carboxymethylcellulose, einem Acrylat, einem Pektin und einem Carrageenan, wobei die Mikrostruktur in einer an zweitem anionischem Polymer reichen Matrix Xanthan-reiche Stränge umfasst, wobei die Zusammensetzung vor der Zusammenmischung mit Wasser eine Viskosität nicht über 500 mPa.s. (Scherrate 1 s$^{-1}$; 25°C) aufweist

15. Zusammensetzung, umfassend Wasser, 0,2-5 Gew.-% eines ersten anionischen Polymers und 0,2-5 Gew.-% eines zweiten anionischen Polymers, wobei die Zusammensetzung die folgenden Eigenschaften aufweist:

    a) Bis zu einem Grenzwert des zweiten anionischen Polymers im vorstehend angegebenen Bereich zeigt die Zusammensetzung ein elastisches Verhalten,
    b) jenseits dieses Grenzwerts zeigt die Zusammensetzung ein viskoses Verhalten,
    c) jenseits dieses Grenzwerts kann die Zusammensetzung durch Zusammenmischung mit weiterem Wasser in ihrem Verhalten elastisch gemacht werden; und
    d) die Zusammensetzung weist vor der Zusammenmischung mit Wasser eine Viskosität nicht über 500 mPa.s. (Scherrate 1 s$^{-1}$; 25°C) auf.

16. Zusammensetzung, umfassend Wasser, 0,2-5 Gew.-% eines ersten anionischen Polymers und 0,2-5 Gew.-% eines zweiten anionischen Polymers, wobei die Zusammensetzung die folgenden Eigenschaften aufweist:

    a) Bis zu einem Grenzwert des zweiten anionischen Polymers im vorstehend angegebenen Bereich ist die Zusammensetzung eine homogene Zusammensetzung,
    b) jenseits dieses Grenzwerts ist die Zusammensetzung eine heterogene Zusammensetzung,
    c) jenseits dieses Grenzwerts kann die Zusammensetzung durch Zusammenmischung mit weiterem Wasser homogen gemacht werden; und
    d) die Zusammensetzung weist vor der Zusammenmischung mit Wasser eine Viskosität nicht über 500 mPa·s. (Scherrate 1 s$^{-1}$; 25°C) auf.

17. Zusammensetzung, umfassend Wasser, 0,2-5 Gew.-% eines ersten anionischen Polymers und 0,2-5 Gew.-% eines zweiten anionischen Polymers, wobei die Zusammensetzung die folgenden Eigenschaften aufweist:

    a) Bis zu einem Grenzwert des zweiten anionischen Polymers im vorstehend angegebenen Bereich weist die Zusammensetzung eine Viskosität von mindestens 1 Pa.s. auf,
    b) jenseits dieses Grenzwerts weist die Zusammensetzung eine um mindestens 50 mPa·s. niedrigere Viskosität als in a) auf,
    c) jenseits dieses Grenzwerts kann die Zusammensetzung durch Zusammenmischung mit weiterem Wasser um mindestens 50 mPa.s. viskoser als in b) gemacht werden; und
    d) die Zusammensetzung weist vor der Zusammenmischung mit Wasser eine Viskosität nicht über 500 mPa.s.

(Scherrate 1 s$^{-1}$; 25°C) auf.

**18.** Verfahren zum Verdicken einer Zusammensetzung nach einem der vorangehenden Ansprüche, wobei das Verfahren das Zusammenmischen der Zusammensetzung mit Wasser bei oder kurz vor der Abgabe an einen gewünschten Verwendungsort zum Erhalt einer verdünnten, verdickten Zusammensetzung umfasst.

**Revendications**

**1.** Composition comprenant de l'eau, un premier polymère anionique et un second polymère anionique, les polymères étant tels que, lors du mélange de la composition avec une quantité d'eau supplémentaire, une composition diluée ayant une viscosité accrue est produite, ladite composition étant **caractérisée en ce qu'**elle a une viscosité, avant ledit mélange avec de l'eau, non supérieure à 500 mPa.s (taux de cisaillement 1 s$^{-1}$; 25°C).

**2.** Composition suivant la revendication 1, la composition contenant au moins 0,2 % en poids/poids des premier et/ou second polymères anioniques (avant un quelconque dit mélange avec une quantité d'eau supplémentaire).

**3.** Composition suivant la revendication 1 ou 2, ladite composition contenant jusqu'à 20 % en poids/poids des premier et/ou second polymères anioniques (avant un quelconque dit mélange avec une quantité d'eau supplémentaire).

**4.** Composition suivant l'une quelconque des revendications précédentes, dans laquelle le premier polymère anionique est le xanthane.

**5.** Composition suivant l'une quelconque des revendications précédentes, dans laquelle le second polymère anionique est choisi entre un alginate, une carboxyméthylcellulose, un polymère d'acrylate, une carraghénine et une pectine.

**6.** Composition suivant l'une quelconque des revendications précédentes, ladite composition comprenant au moins 90 % en poids/poids d'eau.

**7.** Composition suivant l'une quelconque des revendications précédentes, dans laquelle la concentration du premier polymère anionique et du second polymère anionique est telle qu'une composition diluée ayant une viscosité accrue peut être obtenue en mélangeant un volume de la composition à un volume d'eau dans l'intervalle de 0,1 à 5 parties en volume.

**8.** Composition suivant l'une quelconque des revendications précédentes, dans laquelle la composition (initiale, non diluée) a une microstructure substantiellement hétérogène.

**9.** Composition suivant l'une quelconque des revendications précédentes, dans laquelle la composition diluée a une microstructure homogène.

**10.** Composition suivant la revendication 8, dans laquelle le premier polymère anionique est le xanthane et la microstructure hétérogène comprend des brins, riches en xanthane, dans une matrice riche en le second polymère anionique.

**11.** Composition suivant l'une quelconque des revendications précédentes, ladite composition ayant une viscosité, avant ledit mélange avec de l'eau, non supérieure à 250 mPa.s (taux de cisaillement 1 s$^{-1}$ ; 25°C).

**12.** Composition suivant l'une quelconque des revendications précédentes, ladite composition ayant pour propriété de subir une augmentation de viscosité d'au moins 50 mPa.s (taux de cisaillement 1 s$^{-1}$; 25°C) lors du mélange avec un volume égal d'eau.

**13. Composition suivant la revendication 12, ladite** composition ayant pour propriété de subir une augmentation de viscosité d'au moins 100 mPa.s (taux de cisaillement 1s$^{-1}$; 25°C) lors du mélange avec un volume égal d'eau.

**14.** Composition constituée d'eau, d'un premier polymère anionique, à savoir le xanthane, et d'un second polymère anionique choisi entre un alginate, une carboxyméthylcellulose, un acrylate, une pectine et une carraghénine, dans laquelle la microstructure comprend des brins riches en xanthane dans un liquide de matrice riche en le second polymère anionique, la composition ayant une viscosité, avant ledit mélange à l'eau, non supérieure à 500 mPa.s (taux de cisaillement 1 s⁻¹ ; 25°C) .

**15.** Composition comprenant de l'eau, 0,2 à 5 % en poids/poids d'un premier polymère anionique et 0,2 à 5 % en poids/poids d'un second polymère anionique, la composition ayant les caractéristiques suivantes :

a) jusqu'à une valeur seuil du second polymère anionique dans l'intervalle précité, la composition a un comportement élastique,

b) au-delà de la valeur seuil, la composition a un comportement visqueux,

c) au-delà de la valeur seuil, le comportement de la composition peut être rendu élastique par mélange avec une quantité d'eau supplémentaire, et

d) la composition a une viscosité, avant ledit mélange à l'eau, non supérieure à 500 mPa.s (taux de cisaillement 1 s⁻¹ ; 25°C) .

**16.** Composition comprenant de l'eau, 0,2 à 5 % en poids/poids d'un premier polymère anionique et 0,2 à 5% en poids/poids d'un second polymère anionique, la composition ayant les caractéristiques suivantes :

a) jusqu'à une valeur seuil du second polymère anionique dans l'intervalle précité, la composition est une composition homogène,

b) au-delà de la valeur seuil, la composition est une composition hétérogène,

c) au-delà de la valeur seuil, la composition peut être rendue homogène par mélange avec une quantité d'eau supplémentaire, et

d) la composition a une viscosité, avant ledit mélange à l'eau, non supérieure à 500 mPa·s (taux de cisaillement 1 s⁻¹; 25°C).

**17.** Composition comprenant de l'eau, 0,2 à 5 % en poids/poids d'un premier polymère anionique et 0,2 à 5 % en poids/poids d'un second polymère anionique, la composition ayant les caractéristiques suivantes :

a) jusqu'à une valeur seuil d'un second polymère anionique dans l'intervalle précité, la composition a une viscosité d'au moins 1 Pa.s,

b) au-delà de cette valeur seuil, la composition a une viscosité inférieure d'au moins 50 mPa·s à la viscosité en a),

c) au-delà de cette valeur seuil, la composition peut être rendue plus visqueuse qu'en b) d'au moins 50 mPa.s par mélange avec une quantité d'eau supplémentaire, et

d) la composition a une viscosité, avant ledit mélange à l'eau, non supérieure à 500 mPa·s (taux de cisaillement 1 s⁻¹ ; 25°C).

**18.** Procédé pour épaissir une composition suivant l'une quelconque des revendications précédentes, procédé qui comprend le mélange de la composition à de l'eau à, ou peu de temps avant d'amener à, un emplacement désiré d'utilisation, pour obtenir une composition diluée épaissie.

Figure 1

Figure 2

Figure 3

Figure 4       0.1% Monopotassium phosphate, 0.4% Dipotassium phosphate

Figure 5

Figure 6

Figure 7.

**Figure 8.**

Figure 9

Figure 10

Figure 11

Figure 12

Figure 13

Figure 14

Figure 15

Figure 16

Figure 17

Figure 18          0.5% NaCl

Figure 19    0.5% w/w NaCl

Figure 20    1% w/w NaCl

Figure 21    0.638% w/w KCl

Figure 22    1.276% w/w KCl

Figure 23

Figure 24

**Figure 25**

Mean ±SD, n=3

**Figure 26**

Figure 27    The effects of adding different alginates to a 1% xanthan solution

Figure 28.    The effect of adding increasing concentration of sodium carboxymethylcellulose (Low viscosity grade) on the oscillatory rheology of a 1% xanthan solution. A control containing only sodium carboxymethylcellulose is included for comparison.

Figure 29    An RVA (viscosity) profile of the effects of dilution with water and SGF (USP) on a formulation containing 1% xanthan and 1.5% Sodium carboxymethylcellulose (NaCMC).

Figure 30    An RVA (viscosity) profile of the effects of dilution with water and SGF (USP) on a formulation containing 2% xanthan and 1.5% Sodium carboxymethylcellulose (NaCMC).

**Figure 31** The effects of adding increasing amount of alginate to a 1% xanthan solution in the presence of three common pharmaceutical excipients.

**Figure 32** The effect of adding increasing concentrations of alginate to 1% xanthan in the presence of 0.771% magnesium chloride

Figure 33    The effects of magnesium chloride on the Elastic Moduli of LFR 5/60

Figure 34    The effect of adding poly (acrylic acid, sodium salt) of various molecular weights to 1% xanthan

100 μm

Figure 35    Brightfield crossed-polar microscope image

Figure 36    The viscosity of a number of mixtures of 1% xanthan and poly (acrylic acids, sodium salt), at $0.1s^{-1}$, when subjected to differing degrees of dilution.

Figure 37    The elastic modulus of a number of mixtures of 1% xanthan and poly (acrylic acids, sodium salt), at 1.02Hz, when subjected to differing degrees of dilution. The elastic modulus was unmeasurable at 90% dilution.

Figure 38    The effect of adding Potassium Alginate to a 1% xanthan solution

Figure 39      The effects of adding a medium viscosity Low Methoxyl Amidated
Pectin to a 1% xanthan solution.

Figure 40      The effects of adding a low/medium viscosity Lambda Carrageenan to a
1% xanthan solution

Figure 41    The effect on elastic modulus (G') at 1.02 Hz of adding sodium alginate
            'Block' to a 1% xanthan mixture (mean ± SD, n=3)